(19) Europäisches Patentamt
European Patent Office
Office européen des brevets

(11) Veröffentlichungsnummer : **0 406 160 B1**

(12) # EUROPÄISCHE PATENTSCHRIFT

(45) Veröffentlichungstag der Patentschrift :
**02.02.94 Patentblatt 94/05**

(51) Int. Cl.$^5$ : **C07F 7/18,** C08K 5/54

(21) Anmeldenummer : **90810405.2**

(22) Anmeldetag : **05.06.90**

(54) **Haftvermittler.**

(30) Priorität : **13.06.89 CH 2203/89**

(43) Veröffentlichungstag der Anmeldung :
**02.01.91 Patentblatt 91/01**

(45) Bekanntmachung des Hinweises auf die Patenterteilung :
**02.02.94 Patentblatt 94/05**

(84) Benannte Vertragsstaaten :
**CH DE ES FR GB IT LI NL SE**

(56) Entgegenhaltungen :
**DE-A- 3 414 877**
**US-A- 4 289 869**
**US-A- 4 404 379**

(73) Patentinhaber : **CIBA-GEIGY AG**
**Klybeckstrasse 141**
**CH-4002 Basel (CH)**

(72) Erfinder : **Parrinello, Giovanni, Dr.**
**Tervuursesteenweg 87**
**B-1982 Duisburg (BE)**
Erfinder : **Simon, Hubert, Dr.**
**Rue A. Böringer 42**
**F-68100 Mulhouse (FR)**
Erfinder : **Mülhaupt, Rolf, Prof. Dr.**
**Rötebuckweg 30**
**D-8700 Freiburg (DE)**

EP 0 406 160 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die vorliegende Erfindung betrifft stickstoffhaltige Silane, deren Verwendung als Haftvermittler, sowie 1- oder 2-Komponenten Polyurethanharze, welche diese Haftvermittler enthalten und als Klebstoffe, Dichtungsmassen, Oberflächenbeschichtungen oder Isolierstoffe eingesetzt werden.

Die Haftung von ausgehärteten Polyurethanen auf Glas oder Metall ist in vielen technischen Anwendungen unbefriedigend, was zum Einsatz von Grundiermitteln ("Primer") führte. Damit wird ein guter Verbund zwischen Polyurethan und Glas oder Metall erreicht, der auch durch hohe Feuchtigkeit, erhöhte Temperaturen und hohe mechanische Belastung wenig beeinträchtigt wird. Als Primer haben sich z.B. Aminoalkyl-alkoxysilane bewährt (vgl. Plueddemann et al. "Silan coupling agents", Plenum Press, NY [1982]). Allerdings sind die wirksamsten Aminosilan-Haftvermittler als eingebaute Haftvermittler in feuchtigkeitshärtenden Polyurethanen unmodifiziert nicht zu verwenden, da die Aminogruppen mit Isocyanatgruppen abreagieren. Daher sind in der DE-OS 3,414,877 Ketimine und Aldimine von Aminoalkylsilanen beschrieben worden, welche Polyurethan-Klebstoffen zugesetzt werden können ohne deren Lagerstabilität zu beeinträchtigen.

Weiter sind in den US Patentschriften 3,787,416 und 4,289,869 cyclische Aminale als Härter für Polyurethanharze beschrieben. Aus der US Patentschrift 4,404,379 sind Umsetzungsprodukte von cyclischen Aminalen mit Isocyanaten zu Addukten bekannt, die sich als Härter für Polyurethanharze eignen. Jedoch enthalten diese Aminale bzw. Aminaladdukte keine silanhaltigen Gruppen.

Es wurde nun eine Klasse von Verbindungen gefunden, die 1- oder 2-Komponenten-Polyurethanharz-Klebstoffen, -Dichtungsmassen, -Lacken sowie -Isolierstoffen zugesetzt werden, wobei eine signifikant erhöhte Haftung auf Glas, Metall, lackiertem Stahl sowie Kunststoffen erzielt wird, und gleichzeitig die Härtungsgeschwindigkeit nicht beeinträchtigt oder sogar erhöht wird.

Die vorliegende Erfindung betrifft Verbindungen der allgemeinen Formel I

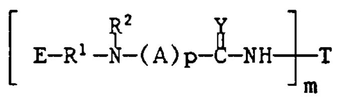

I

worin

- $R^1$ $C_2$-$C_3$ Alkylen
- $R^2$ Wasserstoff, unsubstituiertes oder durch -OH, -CN oder $-Si(OR^3)_{3-q}R^4_q$ substituiertes $C_1$-$C_6$-Alkyl oder $C_2$-$C_6$-Alkenyl,
- $R^3$ $C_1$-$C_4$-Alkyl oder zwei Reste $R^3$ zusammen $C_1$-$C_4$-Alkylen,
- $R^4$ $C_1$-$C_4$ Alkyl oder Phenyl und
- q die Werte 0 bis 2 bedeuten, sowie
- E einen Rest der Formel

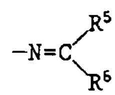

mit

- $R^5$ in der Bedeutung von Wasserstoff oder $C_1$-$C_4$-Alkyl und
- $R^6$ in der Bedeutung von Wasserstoff oder
- $R^5$ und $R^6$ zusammen in der Bedeutung von $C_4$-$C_8$-Alkylen darstellt, oder
- E zusammen mit $R^2$ einen Rest der Formel

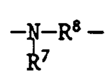

bedeutet, worin

- $R^7$ Wasserstoff, $C_1$-$C_4$-Alkyl oder $-R^9-Si(OR^3)_{3-q}R^4_q$ mit $R^3$, $R^4$ und q in der vorstehenden Bedeutung ist und
- $R^9$ $C_1$-$C_8$-Alkylen bedeutet, und
- $R^8$ einen Rest

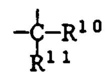

darstellt, worin

$R^{10}$ Wasserstoff oder $C_1$-$C_4$-Alkyl und
$R^{11}$ Wasserstoff oder
$R^{10}$ und $R^{11}$ zusammen $C_4$-$C_8$-Alkylen darstellen,

und

A $-[(CH_2)_r-O]-$ mit r gleich 1, 2 oder 3 und p gleich 0 oder 1 und
Y Sauerstoff oder Schwefel bedeuten; ferner

worin

T einen Rest $-R^9-Si(OR^3)_{3-q}R^4_q$, einen Rest der Formel

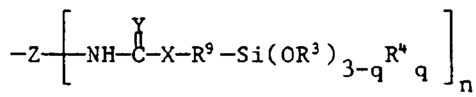

oder, falls $R^7$ einen Rest der Formel $-R^9-Si(OR^3)_{3-q}R^4_q$ darstellt und m einen Wert $\geqq 2$ besitzt, einen m-wertigen Rest Z bedeutet, worin $R^3$, $R^4$, $R^9$, Y und q die vorstehenden Bedeutungen haben,
X -S- oder -NH- ist und
Z ein organischer Rest ist, der sich von einem Polyisocyanat oder einem Polyisothiocyanat mit mindestens 2 NCO- resp. NCS-Gruppen ableitet, und weiter
m einen Wert von $\geqq 1$ und
n einen Wert von $\geqq 1$ bedeuten.

Bevorzugt bedeutet $R^{10}$ $C_1$-$C_4$-Alkyl.

Sind $R^3$, $R^4$, $R^5$, $R^7$ und $R^{10}$ $C_1$-$C_4$ Alkyl oder ist $R^2$ $C_1$-$C_6$ Alkyl, so handelt es sich beispielsweise um Methyl, Ethyl, n-Propyl, Isopropyl, n-Butyl, Isobutyl und t.-Butyl und für $R^2$ zusätzlich um n-Pentyl oder n-Hexyl.

Die bevorzugte Bedeutung von $R^3$ und $R^4$ als Alkyl ist Methyl und Ethyl, insbesondere Methyl.

Bedeuten $R^1$ $C_2$-$C_3$-Alkylen, $R^3$ $C_1$-$C_4$-Alkylen, $R^5$ zusammen mit $R^6$ oder $R^{10}$ zusammen mit $R^{11}$ $C_4$-$C_8$ Alkylen und $R^9$ $C_1$-$C_8$-Alkylen, so handelt es sich dabei um geradkettiges oder verzweigtes Alkylen, wobei das geradkettige Alkylen bevorzugt ist. Beispielsweise handelt es sich um Methylen, Ethylen, Propylen, Trimethylen, Tetramethylen, 2-Methyl-1,3-trimethylen für $R^3$ und $R^9$ und für $R^9$ zusätzlich sowie für $R^5/R^6$ und $R^{10}/R^{11}$ um Pentamethylen, 2-Methyl-1,4-tetramethylen, 3-Propyl-1,3-trimethylen, 1,6-Hexamethylen, 1,7-Heptamethylen, 1,8-Octamethylen oder 2-Ethyl-1,2-hexamethylen, wobei für $R^1$ die Bedeutung auf Ethylen, Propylen und Trimethylen beschränkt ist.

Bevorzugt bedeuten $R^3$ Ethylen, $R^5/R^6$ und $R^{10}/R^{11}$ Tetramethylen und Pentamethylen sowie $R^9$ $C_1$-$C_4$-Alkylen, insbesondere Trimethylen oder Ethylen.

Bedeutet $R^2$ $C_2$-$C_6$-Alkenyl, so handelt es sich dabei um geradkettiges oder verzweigte Alkenyl, bevorzugt um geradkettiges Alkenyl, das eine oder mehrere, bevorzugt jedoch eine Doppelbindung enthält, wie beispielsweise Vinyl, Allyl, n-Butenyl, 1,3-Butadienyl, i-Pentenyl, n-Pentenyl oder n-Hexenyl.

Ist $R^2$ als $C_1$-$C_6$-Alkyl durch OH-, CN- oder $Si(OR^3)_{3-q}R^4_q$-Gruppen substituiert, so kann es sich um eine einfache oder mehrfache Substitution handeln, wobei eine einfache Substitution bevorzugt ist. Die Substitution kann sich in jeder möglichen Position befinden, jedoch ist die terminale Position bevorzugt.

Falls E einen Rest der Formel

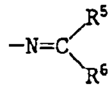

darstellt, ist $R^2$ bevorzugt $C_1$-$C_4$-Alkyl, insbesondere Methyl.

Bevorzugt hat der Parameter p in Formel I den Wert 0.

Ebenfalls bevorzugt besitzt der Parameter q den Wert 0.

Der Rest Z leitet sich von einem Polyisocyanat oder Polyisothiocyanat mit mindestens 2 NCO- resp. NCS-Gruppen ab. Diese erfindungsgemässe NCO-resp. NCS-Funktionalität $\geqq 2$ des Polyisocyanats bzw. Polyisothiocyanats wird dadurch erreicht, dass beispielsweise Polyamine wie z.B. aminoterminierte Polyetherpolyole durch Phosgenierung oder Thiophosgenierung zu Polyisocyanaten bzw. Polyisothiocyanaten mit einer Funktionalität ≧2 umgesetzt werden. Die so erhältlichen Polyisocyanate oder Polyisothiocyanate können entweder direkt eingesetzt werden oder zuerst mit Diolen, Polyolen, Dimercaptanen, Diaminen oder Polyaminen zu NCO- resp. NCS-terminierten Präpolymeren umgesetzt werden. Ebenfalls können die auf nachstehende Weise erhältlichen Polyisocyanate so umgesetzt werden.

Eine weitere Möglichkeit, Polyisocyanate mit einer NCO-Funktionalität ≧ 2 herzustellen, besteht in der Oligomerisierung von Diisocyanaten. So können beispielsweise Diisocyanate wie z.B. Hexamethylendiisocyanat durch partielle Hydrolyse zu biuretgruppenhaltigen Produkten (wie z.B. Desmodur® N100 von Bayer) umgesetzt werden.

Weiter können Diisocyanate wie z.B. Hexamethylendiisocyanat partiell trimerisiert werden, so dass höher funktionelle Polyisocyanate entstehen, welche Isocyanurat-Ringe enthalten wie z.B. Desmodur® N3200 von Bayer.

Eine Kettenverlängerung durch Umsetzung von Diisocyanaten mit polyfunktionellen H-aciden Verbindungen mit einer Funktionalität ≧2 wie z.B. Triole, Tetrole, Pentole, Triamine, Polyamine oder Polymercaptane führt ebenfalls zu Polyisocyanaten mit einer NCO-Funktionalität ≧ 2. Dabei ist das NCO/OH-Verhältnis > 1, vorzugsweise jedoch > 3:1, insbesondere > 10:1.

Als Diisocyanate eignen sich hier sowohl aromatische als auch aliphatische, heterocyclische, monocyclische und polycyclische, bifunktionelle Isocyanatverbindungen. Beispiele für solche Verbindungen sind Toluylendiisocyanat, Diphenylmethandiisocyanat, Naphthylendiisocyanat, Xylylendiisocyanat, Hexamethylendiisocyanat, Trimethylhexamethylendiisocyanat, Isophorondiisocyanat oder Dicyclohexylmethandiisocyanat.

Die Parameter m und n besitzen unabhängig voneinander die Werte 1 bis 49, bevorzugt 1 bis 9, besonders bevorzugt 1 bis 5 und ganz speziell bevorzugt 1, 2 und 3. Die Summe n + m beträgt im allgemeinen 2 bis 50, bevorzugt 2 bis 10, insbesondere 2 bis 6.

Der Rest Z weist vorzugsweise ein mittleres Molekulargewicht Mn <10000, insbesondere Mn < 4000, auf.

Y stellt bevorzugt = 0 dar.

Bevorzugte Verbindungen entsprechen der Formel I, worin Z von einem aliphatischen, cycloaliphatischen, aliphatisch/aromatischen, aromatischen oder heterocyclischen Polyisocyanat oder Polyisothiocyanat mit ≧ 2 NCO-oder NCS-Gruppen abgeleitet ist, wobei dieser Rest Z gegebenenfalls eine oder mehrere Ester-, Ether-, Urethan-, Thiourethan-, Isocyanurat-, Harnstoff- oder Biuret-Funktionen enthalten kann.

Besonders bevorzugte Verbindungen entsprechen der Formel I, worin Z von einem aliphatischen oder gemischt aliphatisch/aromatischen Polyisocyanat mit ≧ 2 NCO-Gruppen abgeleitet ist, wobei dieser Rest Z gegebenenfalls gesamthaft eine oder zwei Ester-, Ether-, Urethan-, Thiourethan-, Isocyanurat-, Harnstoff-, oder Biuret-Funktionen enthält.

Besitzt Z in den Verbindungen der Formel I Ethersauerstoffe, so kann es sich um Monoether oder Oligoether, wie z.B. eine Gruppe der Formel

$$-(CH[CH_3]-CH_2-O)_y-$$

oder $-(CH_2CH_2CH_2CH_2-O)_y$ handeln, wobei y eine Zahl 1-80, vorzugsweise 1-20 bedeutet.

Sind im Rest Z in den Verbindungen der Formel I Carbamat- oder Thiocarbamat-Gruppen enthalten, so handelt es sich um Derivate, welche durch Umsetzung von Polyolen mit Isocyanat- bzw. Isothiocyanat-Gruppen enthaltenden Verbindungen erhältlich sind. Es sind auch Reste darunter zu verstehen, welche sowohl eine oder mehrere Urethangruppen als auch eine oder mehrere Thiourethangruppen enthalten, etwa solche welche ein Brückenglied der Formel

$$-O\overset{O}{\overset{\|}{C}}-NH-P-NH-\overset{O}{\overset{\|}{C}}-O- \quad \text{bzw.} \quad -S-\overset{O}{\overset{\|}{C}}-NH-P-NH-\overset{O}{\overset{\|}{C}}-S-$$

oder

$$-S-\overset{O}{\overset{\|}{C}}-NH-P-NH-\overset{O}{\overset{\|}{C}}-O-$$

enthalten, wobei P der Rest des Polyols bedeutet.

Als Polyole können z.B. auch OH-terminierte Polyether oder Polyester eingesetzt werden.

In bevorzugten Verbindungen der Formel I enthält der Rest Z zwei, in besonders bevorzugten Verbindungen eine Ester-, Carbamat-, Isocyanurat; Harnstoff- oder Biuret-Funktionen. Dabei stellen die Etherfunktionen

eine gewisse Ausnahme dar, da sie, wie oben angezeigt wurde, in der Lage sind Oligoether-Brückenglieder zu bilden. Solche Verbindungen können daher bis zu 80, bevorzugt bis zu 20 Etherfunktionen enthalten.

Bevorzugt werden Verbindungen der Formel I, worin E zusammen mit $R^2$ einen Rest der Formel

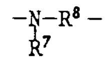

bedeutet und $R^1$ Ethylen darstellt.

Ebenfalls bevorzugt werden Verbindungen der Formel I, worin E einen Rest der Formel

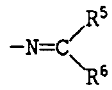

bedeutet, insbesondere diejenigen, worin $R^5$ Isopropyl oder tert. Butyl oder $R^5$ zusammen mit $R^6$ Tetramethylen oder Pentamethylen bedeuten.

Eine weitere bevorzugte Ausführungsform betrifft Verbindungen der Formel I, worin T einen Rest der Formeln $-R^9\text{-}Si(OR^3)_{3-q}R^4_q$ oder

$-R^9-Si(OR^3)_{3-q}R^4_q$ oder 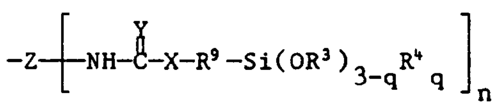

bedeutet, insbesondere diejenigen, worin mindestens ein Rest X -S-darstellt.

Speziell bevorzugt werden Verbindungen der Formel I, worin p den Wert 0 und m den Wert 1 besitzen, E einen Rest

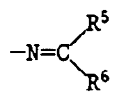

mit $R^5$ in der Bedeutung von $C_3$- oder $C_4$-Alkyl darstellt und $R^2$ $C_1$-$C_4$ Alkyl bedeutet.

Die Herstellung der Verbindungen der Formel I erfolgt auf an sich bekannte Weise und kann am einfachsten anhand der folgenden Reaktionsschematas wiedergegeben werden.

I. Aminal- resp. Imin-Aminteil

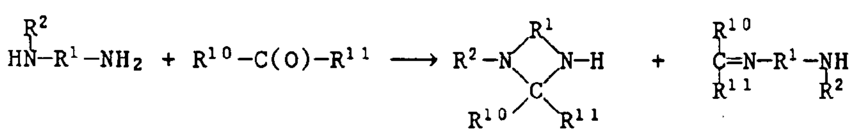

(A) (B) (C) (D)

Diese Methode erfolgt z.B. nach der in der US-Patentschrift 4,404,379 beschriebenen Weise. Die Edukte (A) und (B) sind bekannte Verbindungen, zum Teil im Handel erhältlich oder können auf einfache, bekannte Weise hergestellt werden. Als Edukte (A) eignen sich besonders 3-Methylaminopropylamin und 3-(2-Aminoethylamino)propyltrimethoxysilan. Als Edukte (B) können z.B. die Carbonylverbindungen Formaldehyd, Acetaldehyd, Propionaldehyd, Butyraldehyd, Isobutyraldehyd, Pivalaldehyd, Cyclopentanon oder Cyclohexanon in Frage kommen.

Durch Umsetzung von (c) mit Verbindungen mit reaktiven Doppelbindungen wie z.B. Acrylnitril nach der in der EP-A 70536 beschriebenen Weise können Aminale der Formel (E) hergestellt werden, wobei die Reste $R^2$ unabhängig voneinander verschiedene Bedeutung haben können.

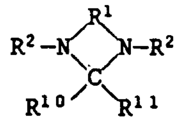

(E)

Die so hergestellten Aminale (C) und (E) sowie Imin-Amine (D) können in einer weiteren Stufe mit einem Polyisocyanat $Z(NCO) \geqq 2$ oder einem Polyisothiocyanat $Z(NCS) \geqq 2$ umgesetzt werden.

II. Silanteil

Die erfindungsgemäss verwendeten Amino- oder Mercapto-alkoxysilane sind bekannte Verbindungen. Sie sind zum Teil im Handel erhältlich oder können nach bekannten Methoden hergestellt werden. Verbindungen dieser Art sind in ausführlicher Weise in "Silane Coupling Agents" von E.P. Plueddemann, Plenum Press, Hew York, 1982, beschrieben.

III. Polyisocyanat $Z(NCO)_{\geqq 2}$ oder Polyisothiocyanat $Z(NCS)_{\geqq 2}$

Die Herstellung dieser Komponenten erfolgt nach literaturbekannten Methoden wie sie z.B. in den US-PS 3,492,330; GB-PS 994,890; DE-PS 1,022,789; DE-PS 1,222,067; DE-PS 1,027,394; DE-OS 1,929,034; DE-OS 2,004,048; US-PS 3,394,164; DE-PS 1,101,394; GB-PS 889,050; BE-PS 723,640; GB-PS 956,474; GB-PS 1,072,956; US-PS 3,567,763 oder DE-PS 1,231,688 beschrieben werden.

Die Polyisothiocyanate können analog hergestellt werden. Anstelle von Diisocyanaten werden die entsprechenden Diisothiocyanaten als Edukte eingesetzt. Aliphatische Edukte können nach den in der US-PS 3,787,472 und aromatische Edukte nach der in "Org. Syntheses"; Collective Volume 1, S. 447 John Wiley, New York, (1948) beschriebenen Methoden hergestellt werden.

IV. Umsetzung der Polyisocyanate oder Polyisothiocyanate gemäss III. mit den Aminalen (C) und/oder (E) resp. den Imin-Aminen (D) sowie mit den Silanen gemäss II. zu den Verbindungen der Formel I.

Die Umsetzung der Polyisocyanate resp. Polyisothiocyanate mit den andern beiden Komponenten kann nacheinander oder miteinander erfolgen. Bei stufenweiser Umsetzung kann zuerst die Aminalverbindung resp. Imin-Aminverbindung mit dem Polyisocyanat resp. Polyisothiocyanat umgesetzt werden und anschliessend das Addukt mit dem Alkoxysilan oder umgekehrt. Dabei ist es auch möglich verschiedene Aminal-, Imin-Amin- resp. Silan-Komponenten an das Polyisocyanat resp. -thiocyanat zu addieren, wobei es möglich ist, die verschiedenen Komponenten alternierend umzusetzen d.h. z.B. zuerst Addition eines Silans, dann Aminal- resp. Imin-Aminaddition und schliesslich Addition des zweiten Silans.

Die Umsetzung erfolgt in der Regel ohne Lösungsmittel, jedoch können bei Bedarf eine oder alle Komponenten durch ein geeignetes inertes Lösungsmittel verdünnt werden, um z.B. die Viskosität den Erfordernissen anzupassen.

Die Addition selbst erfolgt bei Temperaturen zwischen 15°C und 200°C, bevorzugt aber bei Temperaturen zwischen 30°C und 140°C.

Der Reaktionsverlauf kann durch Infrarotspektroskopie oder Titration verfolgt werden.

Bei den Additionsreaktionen können auch Katalysatoren der an sich bekannten Art mitverwendet werden, wie z.B. tertiäre Amine wie beispielsweise Triethylamin, N-Methyl-morpholin, N,N,N',N'-Tetramethyl-ethylendiamin oder 1,4-Diaza-bicyclo-(2,2,2)-octan. Auch organische Metallverbindungen, insbesondere organische Zinnverbindungen, können als Katalysatoren verwendet werden.

Beispiele für organische Zinnverbindungen sind Zinn(II)-salze von Carbonsäuren, wie z.B. Zinn(II)-acetat, Zinn(II)-octoat und Zinn(II)-laurat, oder die Dialkylzinnsalze von Carbonsäuren, wie z.B. Dibutylzinndiacetat, Dibutylzinn-dilaurat oder Dioctyl-zinndiacetat.

Die stöchiometrischen Verhältnisse bei der Addition der Aminal- resp. Imin-Amin- und Silan-Komponenten an die Polyisocyanate resp. -thiocyanate sind so gehalten, dass das Verhältnis von NH- resp. $NH_2$-Gruppen der Aminale resp. Imin-Amine und der $NH_2$- resp. SH-Gruppen der Silane ungefähr äquimolar zu den NCO- resp. NCS-Gruppen der Polyisocyanate resp. -thiocyanate ist. Dabei kann das Addukt noch freie NCO- resp. NCS-Gruppen enthalten. Vorzugsweise ist jedoch keine freie NCO- resp. NCS-Gruppe vorhanden.

Mit dem stöchiometrischen Verhältnis der Edukte bei der Additionsreaktion lässt sich das Verhältnis Aminal- resp. Harnstoffiminreste zu Silanreste in den erfindungsgemässen Verbindungen der Formel I steuern.

Dazu werden vorzugsweise die Aminal resp. Imin-Amin- resp. die Silanverbindung in getrennten Schritten mit dem Polyisocyanat resp. -thiocyanat umgesetzt. Die erste Stufe erfolgt in der Regel bei einem Verhältnis von NH- resp. $NH_2$- oder SH-Gruppen zu NCO- bzw. NCS-Gruppen von kleiner als 1. Das bevorzugte Aminal-NH resp. Iminamin-$NH_2$/NCO- resp. NCS-Verhältnis liegt zwischen 1:2 bis 1:6, insbesondere zwischen 1:3 und 1:5. Das bevorzugte Verhältnis von Silan-$NH_2$-resp. -SH/NCO-resp. NCS-Gruppen liegt zwischen 2:3 und 1:5, insbesondere zwischen 2:3 und 1:2.

In der zweiten Stufe werden in der Regel die restlichen freien NCO- resp. NCS-Gruppen mit den Aminal-NH resp. Iminamin-$NH_2$- bzw. Silan-$NH_2$- oder -SH-Gruppen abreagiert. Dazu ist das stöchiometrische Verhältnis der H-aciden Gruppen zu NCO- resp. NCS-Gruppen $\geqq 1$, bevorzugt 4:1 bis 1:1, insbesondere 2:1 bis 1:1.

Es ist jedoch auch möglich, in der zweiten Stufe die restlichen freien NCO- resp. NCS-Gruppen nur partiell abzureagieren. Dann gelten die gleichen stöchiometrischen Verhältnisse wie bei der ersten Additionsstufe. Ein solches Vorgehen wird bevorzugt angewendet, wenn zwei oder mehr verschiedene Aminal- resp. Imin-Amin- resp. Silanverbindungen addiert werden.

Die erfindungsgemässen Verbindungen können in Polyurethanharzen als Haftvermittler eingesetzt werden. Besonders wirkungsvoll ist ihr Einsatz in feuchtigkeitshärtenden Polyurethanharzen, welche als Klebstoffe, Dichtungsmassen, Lacke oder Isolierstoffe zur Anwendung kommen. Handelt es sich um Klebstoffe, so besitzen die erfindungsgemässen Verbindungen Eigenschaften, welche ihren Einsatz in Zweikomponenten- und ganz besonders in Einkomponentensystemen ermöglicht. Der Einsatz der erfindungsgemässen Verbindungen als eingebaute Haftvermittler in den genannten Substraten macht eine Vorbehandlung der zu verklebenden Oberflächen mit 12inem Primer überflüssig. Als Anwendungsbeispiele sei das Verkleben von Windschutzscheiben und Scheinwerfer im Automobilbau erwähnt. Verbindungen der Formel I mit $m \geqq 2$ können ausserdem als feuchtigkeitsaktivierte Härter für die genannten Substrate eingesetzt werden. Ferner können Verbindungen der Formel I als Primer zur Substratvorbehandlung eingesetzt werden.

Handelt es sich beim Substrat um ein feuchtigkeitshärtendes Polyurethan, so enthalten diese als Hauptbestandteil mehrfunktionelle Isocyanate und/oder Polyurethan-Präpolymere. Geeignet sind hier sowohl aromatische als auch aliphatische, monocyclische wie polycyclische, mehrfunktionelle Isocyanatverbindungen. So kann nach einer ersten Ausführungsform als aromatische Isocyanatverbindung Toluylendiisocyanat oder Diphenylmethandiisocyanat eingesetzt werden. Besonders geeignet ist technisches Diphenylmethandiisocyanat mit einem Gehalt an höherfunktionellen Diisocyanaten und einer Funktionalität an Isocyanatgruppen grösser als 2. Ein weiteres geeignetes aliphatisches Diisocyanat ist Xylylendiisocyanat. Darüber hinaus kann eine Vielzahl aliphatischer Isocyanate der Funktionalität 2 und höher eingesetzt werden. Beispiele sind hier Isophorondi isocyanat und Dicyclohexylmethandiisocyanat als cyclische aliphatische Diisocyanate. Weitere Beispiele sind aliphatische, geradkettige Diisocyanate, wie sie durch Phosgenisierung von Diaminen gewonnen werden, z.B. Tetramethylendiisocyanat oder Hexamethylendiisocyanat.

Nach einer bevorzugten Ausführungsform der Erfindung werden anstatt der mehrfunktionellen Isocyanatverbindungen Polyurethan-Präpolymere eingesetzt. Unter Präpolymeren werden hier die Addukte eines Ueberschusses mehrfunktioneller Isocyanate an mehrfunktionelle Alkohole, etwa die Umsetzungsprodukte eines der vorgenannten aromatischen oder aliphatischen Diisocyanate mit Ethylenglykol, Propylenglykol, Glycerin, Trimethylolpropan oder Pentaerythrit verstanden. Auch Umsetzungsprodukte von Diisocyanaten mit Polyetherpolyolen, z.B. Polyetherpolyolen auf Basis Polyethylenoxid oder auf Basis Polypropylenoxid können als Prepolymere verwendet werden. Bevorzugt sind Polyurethan-Präpolymere auf Basis von Polyetherpolyolen mit Molgewichten zwischen 200 und 10000, insbesondere 500 und 3000. Dem Polyurethan-Fachmann sind eine grosse Anzahl derartiger Polyetherpolyole bekannt; sie werden von zahlreichen Herstellern angeboten und über ihr Molekulargewicht (Zahlenmittel), das aus Endgruppenbestimmungen errechenbar ist, charakterisiert. Weitere geeignete Polyetherpolyole sind Polyetherpolyole auf Basis Polytetrahydrofuran.

Anstelle von Polyetherpolyolen können auch Polyesterpolyole eingesetzt werden. Geeignete Polyesterpolyole sind Umsetzungsprodukte mehrfunktioneller Säuren mit mehrfunktionellen Alkoholen, beispielsweise Polyester auf Basis aliphatischer und/oder aromatischer Dicarbonsäure und mehrfunktioneller Alkohole der Funktionalität 2-4. So können Polyester aus Adipinsäure, Sebacinsäure, Phthalsäure, Hydrophthalsäure und/oder Trimellitsäure einerseits und Ethylenglykol, Propylenglykol, Neopentylglykol, Hexanglykol, Glycerin und/oder Trimethylolpropan andererseits eingesetzt werden. Geeignet sind insbesondere Polyesterpolyole mit Molekulargewicht (Zahlenmittel) zwischen 500 und 5000, insbesondere zwischen 600 und 2000. Weitere geeignete Polyesterpolyole sind die Umsetzungsprodukte von Caprolacton mit Alkoholen der Funktionalität von 2-4, so beispielsweise das Additionsprodukt von 1-5 Mol Caprolacton an 1 Mol Ethylenglykol, Propylenglykol, Glycerin und/oder Trimethylpropan.

Eine weitere geeignete Klasse mehrfunktioneller Alkohole sind Polybutadienole. Hierbei handelt es sich um Oligomere auf Basis Butadien, die als Endgruppen OH-Gruppen aufweisen. Geeignet sind hier Produkte

im Molekulargewichtsbereich 200-4000, insbesondere 500-3000. Ferner sind Siloxanpräpolymere, vorzugsweise in Kombination mit andern Präpolymeren, geeignet.

Bei der Herstellung der Polyurethan-Präpolymeren ist das Verhältnis von OH-Gruppen der Alkoholkomponente zu Isocyanatgruppen von Bedeutung. Dieses liegt im allgemeinen zwischen 1:2 und 1:10. Dabei werden mit höheren Isocyanatüberschüssen eher niedrigviskose Polyurethan-Präpolymere erhalten, während niedere Isocyanatüberschüsse hochviskose, meist nur noch spachtelbare Zubereitungen liefern.

Es ist dem Polyurethan-Fachmann bekannt, dass die Vernetzungsdichte und damit die Härte der Polyurethane mit der Funktionalität der Isocyanatkomponente oder auch des Polyols zunimmt. Es sei hier auf die allgemeine Fachliteratur verwiesen, z.B. auf die Monographie von Saunders und Frisch "Polyurethanes, Chemistry and Technology", Band XVI der Serie High Polymers "Intescience Publishers" New York-London, Teil I (1962) und Teil II (1964).

Die erfindungsgemässen Polyurethanzubereitungen können weiterhin verschiedene Hilfsstoffe enthalten. Verwendet werden können hier z.B. Füllstoffe. Als Füllstoffe geeignet sind gegenüber Isocyanaten nichtreaktive, anorganische Verbindungen wie z.B. Kreide oder Kalkmehl, gefällte und/oder pyrogene Kieselsäuren, Zeolithe, Bentonite, gemahlene Mineralien sowie andere dem auf dem Arbeitsgebiet tätigen Fachmann bekannte anorganische Füllstoffe, insbesondere Faserkurzschnitte und anderes. Für manche Anwendungen sind Füllstoffe bevorzugt, die den Zubereitungen Thixotropie verleihen, so beispielsweise quellbare Kunststoffe insbesondere PVC.

Ausser den genannten Verbindungen können die erfindungsgemässen Polyurethanzubereitungen noch weitere Hilfsstoffe, beispielsweise Lösungsmittel enthalten. Geeignet sind Lösungsmittel, die ihrerseits nicht mit Isocyanatgruppen reagieren, so z.B. halogenierte Kohlenwasserstoffe, Ester, Ketone, aromatische Kohlenwasserstoffe u.a.. Auch Weichmacher, Flammschutzmittel, Verzögerer, Farbstoffe und Alterungsschutzmittel, wie sie in Polyurethan-Klebstoffen und Dichtungsmassen bekannt sind, können mit eingearbeitet werden.

Für manche Anwendung ist es wünschenswert, den erfindungsgemässen Polyurethanzubereitungen Schaumstabilisatoren zuzusetzen. Als Schaumstabilisatoren können sogenannte Silikotenside verwendet werden. Es sind dies Blockcopolymere, die aus einem Polysiloxanblock und einem oder mehreren Polyoxyethylen- und/oder Polyoxypropylenblöcken aufgebaut sind. Die erfindungsgemässen Polyurethanzubereitungen können weiterhin flammhemmende und weichmachende Zusätze enthalten. Gängig sind Phosphor- und/oder Halogenatome enthaltende Verbindungen, wie Tricresylphosphat, Diphenylcresylphosphat, Tris-2-chlorethylphosphat, Tris-2-chlorpropylphosphat und Tris-2,3-dibrompropylphosphat. Zusätzlich können Flammschutzmittel verwendet werden, z.B. Chlorparaffine, Halogenphosphide, Ammoniumphosphat und halogen- und phosphorhaltige Harze. Als weitere Zusätze sind für manche Anwendungen Weichmacher von Bedeutung. Geeignet sind hier beispielsweise Ester der Phthalsäure oder Ester langkettiger Dicarbonsäuren, beispielsweise Sebacinsäure- oder Azelainsäureester. Auch sogenannte Epoxidweichmacher, z.B. epoxydierte Fettsäurederivate können hier eingesetzt werden.

Weitere mögliche Zusätze sind basische Beschleuniger. Basische Beschleuniger sind beispielsweise tertiäre Basen wie Bis-(N,N'-dimethylamino)-diethylether, Dimethylamino-cyclohexan, N,N-Dimethyl-benzylamin, N-Methylmorpholin sowie die Umsetzungsprodukte von Dialkyl-(β-hydroxyethyl)-amin mit Monoisocyanaten und Veresterungsprodukte von Dialkyl-(β-hydroxyethyl)-amin und Dicarbonsäuren. Ein weiterer wichtiger Beschleuniger ist das 1,4-Diamino-bicyclo-(2.2.2)-octan. Ferner können nicht-basische Substanzen als Beschleuniger verwendet werden. Hier seien Metallverbindungen genannt, beispielsweise Eisenacetylacetonat sowie Zinn-(II)-2-ethylhexoat, Dibutylzinndilaurat oder Molybdänglykolat.

Polyurethan-Präpolymeren werden die Verbindungen der Formel I in Mengen von 0,1-20 Gew.%, bevorzugt 0,5-5 Gew.%, insbesondere 0,5-2,5 Gew.%, bezogen auf das Präpolymer, zugegeben.

Werden die Verbindungen der Formel I als Härter eingesetzt, so soll das Mol-Verhältnis von freigesetzten >NH-Gruppen zu freien Isocyanatgruppen im Präpolymer 0,5 bis 1,5:1; vorzugsweise 0,9 bis 1,1:1 betragen.

<u>Herstellung der Ausgangsmaterialien</u>

<u>Beispiel A:</u> 1-Methyl-hexahydropyrimidin

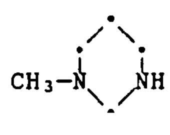

Die Verbindung wird nach der in der US-Patentschrift 4,404,379 beschriebenen Weise hergestellt.
Siedepunkt: 78°C/266 mbar

$^1$H-NMR: δ 3,30 (s,N-C<u>H</u>$_2$-N); 2,79 (t, J = 5,6 Hz, 2 H); 2,53 (t, J = 5,6 Hz, 2 H); 2,15 (s, C<u>H</u>$_3$); 1,63 (p, J = 5,6 Hz, 2 H).
$^{13}$C-NMR ($CDCl_3$): δ 70,3; 54,2; 43,4; 41,7; 26,2.

| Elementaranalyse: $C_5H_{12}N_2$ | | gef. | ber. |
|---|---|---|---|
| | % C | 59,97 | 59,96 |
| | % H | 12,11 | 12,08 |
| | % N | 27,83 | 27,97 |

<u>Beispiel B:</u> 1-Methyl-2-(1-methylethyl)-hexahydropyrimidin

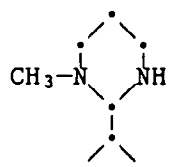

Die Verbindung wird nach der in der US-Patentschrift 4,404,379 beschriebenen Weise hergestellt.
Siedepunkt: 91°C/93 mbar
$^1$H-NMR ($CDCl_3$): δ 3,02 (dm, J = 12 Hz, 1 Heq); 2,88 (dm, J = 12 Hz, 1 Heq); 2,54 (d, J = 3 Hz, 1 H); 2,52 (td, Jgem = 12 Hz, Jvic = 3 Hz, 1 Hax); 2,25 (td, Jgem = 12 Hz, Jvic = 3 Hz, 1 Hax); 2,08 (s, 3 H); 1,95 (m, 1 Hax); 1,61 (m, 1 H); 1,38 (dm, J = 12 Hz, 1 Heq); 0,95 (d, J = 6,6 Hz, 3 H); 0,88 (d, J = 6,6 Hz, 3 H).
$^{13}$C-NMR ($CDCl_3$): δ 83,1; 56,8; 45,8; 40,6; 28,4; 27,2; 19,6; 14,7.

| Elementaranalyse: $C_8H_{18}N_2$ | | gef. | ber. |
|---|---|---|---|
| | % C | 67,35 | 67,49 |
| | % H | 12,62 | 12,65 |
| | % N | 19,66 | 19,68 |

<u>Beispiel C:</u> 1-(2-Hydroxyethyl)-3-(2-cyanoethyl)-hexahydropyrimidin

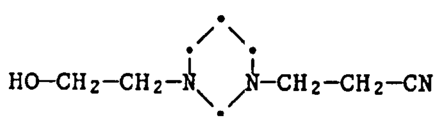

Die Verbindung wird nach der in der EP-A 70536 beschriebenen Weise hergestellt.
Siedepunkt 81°C/0,13 mbar
$^1$H-NMR ($CDCl_3$): δ 3,62 (t, J = 5,3 Hz, C<u>H</u>$_2$-OH); 3,32 (s, N-C<u>H</u>$_2$-N), 2,82 - 2,43 (m, 10 H); 1,68 (p, J = 5,7 Hz, 2 H). $^{13}$C-NMR ($CDCl_3$): δ 118,2; 74,4; 58,3; 55,9; 51,3; 51,2; 49,3; 22,2; 15,8.

| Elementaranalyse: $C_9H_{17}N_3O$: | | gef. | ber. |
|---|---|---|---|
| | % C | 59,01 | 58,99 |
| | % H | 9,43 | 9,35 |
| | % N | 22,72 | 22,93 |

Beispiel D: 1-methyl-2-pentamethylen-hexahydropyrimidin

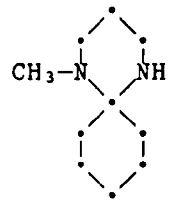

Zu einer Lösung von 590 g (6 Mol) Cyclohexanon in 400 ml Cyclohexan werden 52,8 g (6 Mol) 3-Methylaminopropylamin zugetropft. Die Lösung wird anschliessend unter einer Stickstoffatmosphäre an einem Wasserabscheider zum Rückfluss erhitzt bis ca. 100 ml Wasser abgeschieden sind (10 h). Darauf wird das Lösungsmittel unter vermindertem Druck entfernt und der Rückstand fraktioniert destilliert. Es werden 680 g 1-Methyl-2-pentamethylen-hexahydropyrimidin erhalten.
Siedepunkt: 112°C/93 mbar
$^{13}$C-NMR ($CDCl_3$): δ 69,2; 48,3; 38,5; 37,1; 29,7; 25,8; 25,4; 21,4.

| Elementaranalyse: | $C_{10}H_{20}N_2$ | gef. | ber. |
|---|---|---|---|
| | % C | 71,45 | 71,42 |
| | % H | 11,91 | 11,98 |
| | % N | 17,29 | 16,65 |

Beispiel E: 1-[3-(Trimethoxysilyl)propyl]-2-(1-methylethyl)-imidazolidin

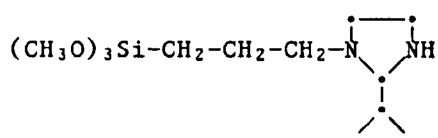

Zu einer Lösung von 100 g (0,45 Mol) 3-(2-Aminoethylamino)propyltrimethoxysilan in 200 ml trockenem Cyclohexan werden 32,3 g (0,45 Mol) Isobutyraldehyd zugetropft. Die Lösung wird anschliessend an einem Wasserabscheider zum Rückfluss erhitzt bis 20 ml Wasser abgeschieden sind (10 h).

Das Lösungsmittel wird darauf unter vermindertem Druck entfernt und der Rückstand fraktioniert destilliert. Es werden 16 g 1-[3-(Trimethoxysilyl)propyl]-2-(1-methylethyl)-imidazolidin erhalten.

$^{1}$H-NMR ($CDCl_3$): δ 3,24 - 2,85 (m, 4 H); 3,57 (s, $OC\underline{H}_3$); 2,78 - 2,57 (m, N-C$\underline{H}$-N); 2,38 - 2,15 (m, $C\underline{H}_2$-N); 1,86 - 1,45 (m, 3 H); 0,98 (d, J = 7,4 Hz, $C\underline{H}_3$); 0.83 (d, J = 7,4 Hz, $C\underline{H}_3$); 0,79 - 0,56 (m, $C\underline{H}_2$-Si).
$^{13}$C-NMR ($CDCl_3$): δ 84,7; 56,5; 53,3; 50,2; 44,2; 29,9; 22,2; 19,5; 15,1; 6,6.

| Elementaranalyse: | $C_{12}H_{28}N_2O_3Si$ | gef. | ber. |
|---|---|---|---|
| | % C | 52,03 | 52,17 |
| | % H | 10,12 | 10,14 |
| | % N | 10,14 | 10,14 |

Beispiel F: 1-[3-(Trimethoxysilyl)propyl]-2-pentamethylen-imidazolidin

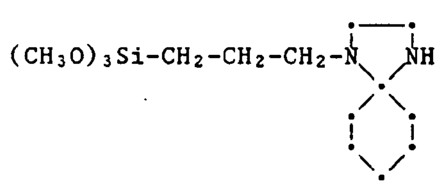

Es wird entsprechend Beispiel E gearbeitet, jedoch werden 44,1 g (0,45 Mol) Cyclohexanon zugetropft und 18 ml Wasser abgeschieden (12 h). Es werden 120 g Produkt erhalten.[1]
$^1$H-NMR ($CDCl_3$): δ 3,57 (m, 0CH$_3$); 3,06 - 2,66 (m, 4 H); 2,55 - 2,28 (m, 2 H); 1,39 - 1,25 (m, 12 H); 0,75 - 0,59 (m, CH$_2$-Si).
$^{13}$C-NMR ($CDCl_3$): δ 78,4; 51,6; 50,5; 50,2; 42,3; 31,3; 25,9; 23,5; 22,7; 6,5.

| Elementaranalyse: | $C_{14}H_{30}N_2O_3Si$ | gef. | ber. |
|---|---|---|---|
| | % C | 55,85 | 55,54 |
| | % H | 9,84 | 9,91 |
| | % N | 10,14 | 9,26 |

Beispiel G: N-Methyl-3-(2,2-dimethylpropylimino)-propylamin

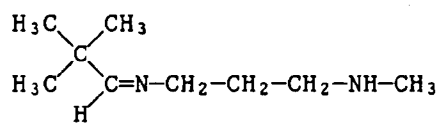

Zu einer Lösung von 76,7 g (0,87 Mol) 3-Methylaminopropylamin in 200 ml trockenem Cyclohexan werden 75,0 g (0,87 Mol) Pivalaldehyd zugetropft. Nach der Zugabe wird die Lösung an einem Wasserabscheider während 3 h zum Rückfluss erhitzt. Danach wird das Lösungsmittel in einem Rotationsverdampfer entfernt und der Rückstand destilliert.
Siedepunkt: 69°C/67 mbar.
$^1$H-NMR ($CDCl_3$): δ 7,51 (t, J = 1,1 Hz, CH = N); 3,43 (td, J = 6,8 Hz, J = 1,1 Hz, CH$_2$-N=C); 2,59 (t, J = 6,8 Hz, CH$_2$-NH); 2,42 (s, N-CH$_3$); 1,75 (p, J = 6,8 Hz, 2 H); 1,06 (s, CH$_3$). $^{13}$C-NMR ($CDCl_3$): δ 171,1; 59,0; 49,7; 36,1; 35,5; 30,6; 26,5.

| Elementaranalyse: | $C_9H_{20}N_2$ | gef. | ber. |
|---|---|---|---|
| | % C | 69,05 | 69,17 |
| | % H | 12,96 | 12,90 |
| | % N | 18,11 | 17,93 |

Beispiel H:

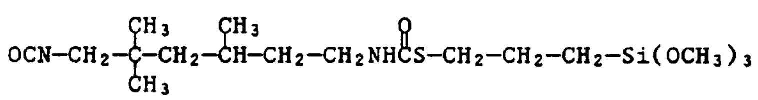

Ein Gemisch von 150 g (0,714 Mol) frisch destilliertem 1,6-Diisocyanato-2,2,4-trimethylhexan und 140,2 g (0,714 Mol) 3-Mercaptopropyltrimethoxysilan wird 2 h unter Stickstoffatmosphäre auf 140°C erhitzt. Es werden 275,2 g des Produkts als farblose Flüssigkeit mit den folgenden Analysendaten erhalten:
Viskosität (nach Epprecht): $\eta_{25}$ = 380 mPa·s
$^{13}$C-NMR ($CDCl_3$ ausgewählte Signale): δ 167,1 (br, NCO-S);
122,2 (br, NCO); 50,3 (OCH$_3$); 8,6 (Si-CH$_2$).

[1] Ca. 10 % der offenen Struktur kann durch $^{13}$C-NMR (δ 174,0) und $^1$H-NMR (δ 3,43, 0CH$_3$) nachgewiesen werden. Der Anteil an offener Struktur wird durch Integration der beiden Methoxy-Peaks bei 3,43 und 3,57 ppm berechnet. Ein Tautomerismus zwischen zwei ähnlichen Strukturen wird von C. Chapuis et al., Bull. Soc. Chim. Fr. 1973, 977 erwähnt.

| Elementaranalyse: | $C_{17}H_{34}N_2O_5SSi$ | gef. | ber. |
|---|---|---|---|
| | % C | 50,17 | 50,17 |
| | % H | 8,45 | 8,36 |
| | % N | 6,82 | 6,88 |

Beispiel 1:

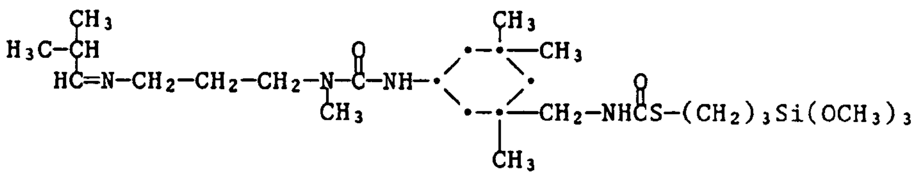

Eine Mischung aus 143,5 g (0,642 Mol) Isophorondiisocyanat und 126,0 g (0,642 Mol) 3-Mercaptopropyltrimethoxysilan wird unter Stickstoffatmosphäre 6 h bei 140°C erhitzt. Dann lässt man auf Raumtemperatur abkühlen und gibt eine Lösung von 90,8 g (0,642 Mol) 1-Methyl-2-(1-methylethyl)-hexahydropyrimidin in 200 ml trockenem Toluol tropfenweise zu, sodass die Temperatur nicht über 35°C steigt. Anschliessend wird bei Raumtemperatur während 30 Minuten weitergerührt und dann das Lösungsmittel bei 100°C/0,1 mbar am Rotationsverdampfer abgezogen. Es werden 351 g des Produkts mit den folgenden Analysendaten erhalten.

Schmelzpunkt 40 - 50°C

$^1$H-NMR ($CDCl_3$, ausgewählte Signale): δ 7,55 (d, J = 5 Hz, C<u>H</u> = N); 6,02 - 5,08 (br, m, N-CO-N<u>H</u> + S-CO-N<u>H</u>); 3,56 (s, OC<u>H</u>$_3$); 2,88 (s, N-C<u>H</u>$_3$); 2,41 (qd, J = 10 Hz, 6 Hz, $(CH_3)_2$C<u>H</u>). $^{13}$C-NMR ($CDCl_3$, ausgewählte Signale): 169,8 (<u>C</u>H = N); 167,3 und 165,8 (N-<u>C</u>O-S, zwei Isomere); 158,8 und 157,9 (N-<u>C</u>O-N, zwei Isomere); 56,6 (<u>C</u>H$_2$-H=C); 50,0 (0-<u>C</u>H$_3$); 45,7 (<u>C</u>H$_2$N(CH$_3$)CO-N); 33,5 (N-<u>C</u>H$_3$); 18,4 (<u>C</u>(CH$_3$)$_2$); 8,2 (Si-<u>C</u>H$_2$).

| Elementaranalyse: | $C_{28}H_{54}N_4O_5SSi$: | gef. | ber. |
|---|---|---|---|
| | % C | 55,57 | 55,58 |
| | % H | 9,31 | 9,51 |
| | % N | 9,75 | 9,97 |
| | % S | 5,77 | 5,71 |

Beispiel 2:

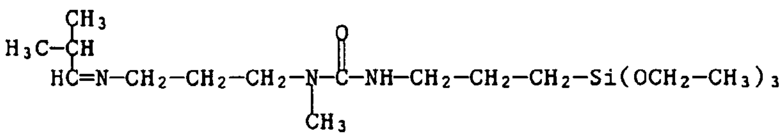

Eine Lösung von 34,4 g (0,14 Mol) Isocyanatopropyltriethoxysilan in 50 ml trockenem Toluol wird zu einer Lösung von 20,0 g (0,142 Mol) 1-Methyl-2-(1-methylethyl)-hexahydropyrimidin in 50 ml trockenem Toluol zugetropft, wobei die Temperatur unter 35°C gehalten wird. Nach Beendigung der Zugabe wird die Mischung bei Raumtemperatur während 7 h gerührt. Dann wird das Lösungsmittel bei 100°C/0,1 mbar am Rotationsverdampfer abgezogen und man erhält 50 g einer farblosen Flüssigkeit mit den folgenden Analysendaten:

$^1$H-NMR ($CDCl_3$): δ 7,58 (d, J = 6 Hz, C<u>H</u> = N); 5,91 (br.t, N-CO-N<u>H</u>); 3,80 (q, J = 7 Hz, 0C<u>H</u>$_2$); 3,25 - 3,02 (m, 6 H); 2,88 (s, N-C<u>H</u>$_3$), 2,41 (qd, J = 10 Hz, 6 Hz, $(CH_3)_2$C<u>H</u>); 1,95 - 1,20 (m, 4H); 1,13 (d, J = 10 Hz, 6 H); 1,05 (t, J = 7 Hz, 9 H); 0,80 (m, 2 H).

$^{13}$C-NMR ($CDCl_3$), δ 169,3, 158,6; 57,7; 56,5; 45,6; 43,0, 33,4; 29,0; 23,3; 18,6; 17,7; 7,4.

| Elementaranalyse: | $C_{18}H_{39}N_3O_4S$: | gef. | ber. |
|---|---|---|---|
| | % C | 55,55 | 55,49 |
| | % H | 10,02 | 10,09 |
| | % N | 10,74 | 10,79 |

Beispiel 3:

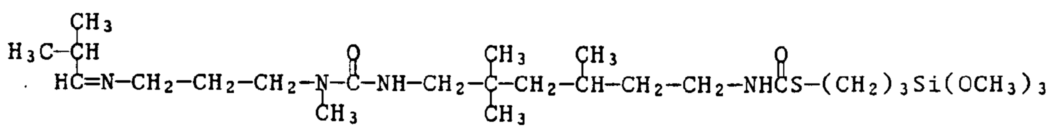

Ein Gemisch von 150 g (0,714 Mol) frisch destilliertem 1,6-Diisocyanato-2,2,4-trimethylhexan und 140,2 g (0,714 Mol) 3-Mercaptopropyltrimethoxysilan wird 2 h unter Stickstoffatmosphäre auf 140°C erhitzt, worauf man auf Raumtemperatur abkühlen lässt und eine Lösung von 100,8 g (0,714 Mol) 1-Methyl-2-(1-methylethyl)-hexahydropyrimidin in 200 ml trockenem Toluol zutropft, so dass die Temperatur unter 35°C gehalten wird. Anschliessend wird das Gemisch bei Raumtemperatur noch weitere 45 Minuten gerührt und dann das Lösungsmittel bei 100°C/0,1 mbar am Rotationsverdampfer abgezogen. Es werden 347 g einer viskosen Flüssigkeit mit den folgenden Analysendaten erhalten:

Viskosität (nach Epprecht): $\eta_{25}$= 19200 mPa·s

$^1$H-NMR ($CDCl_3$, ausgewählte Signale): δ 7,58 (d, J = 6 Hz, C$\underline{H}$ = N); 6,21 - 5,50 (br.m; N-CO-N$\underline{H}$ + S-CO-N$\underline{H}$); 3,56 (s, 0C$\underline{H_3}$); 2,41 (qd, J = 10 Hz, 6 Hz, $(CH_3)_2C\underline{H}$).

$^{13}$C-NMR ($CDCl_3$, ausgewählte Signale): δ 169,6 ($\underline{C}$H = N); 167,1 (br, N-$\underline{C}$O-S); 158,5 (N-$\underline{C}$O-N); 56,5 ($\underline{C}H_2$-N=C); 50,1 (O$\underline{C}H_3$); 46,1 ($\underline{C}H_2N(CH_3)$CO-N); 33,5 (N-$\underline{C}H_3$); 19,4 ($C(\underline{C}H_3)_2$); 8,2 (Si-$\underline{C}H_2$).

| Elementaranalyse: | $C_{25}H_{52}N_4O_5SSi$: | gef. | ber. |
|---|---|---|---|
| | % C | 54,23 | 54,66 |
| | % H | 9,48 | 9,47 |
| | % N | 9,93 | 10,20 |

Beispiel 4:

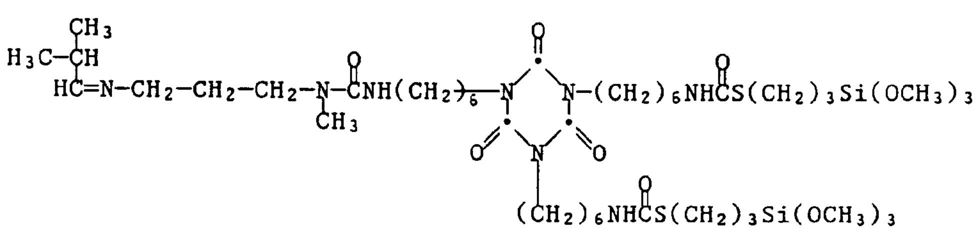

Ein Gemisch aus 50 g (0,257 Mol NCO) partiell trimerisiertem Hexamethylendiisocyanat mit einem Isocyanatgehalt von 21,6 % (Desmodur® N 3200 der Firma Bayer AG) und 33,7 g (0,171 Mol) 3-Mercaptopropyltrimethoxysilan wird 60 Minuten bei 140°C erhitzt. Dann lässt man auf Raumtemperatur abkühlen und gibt eine Lösung von 12,2 g (0,0857 Mol) 1-Methyl-3-(1-methylethyl)-hexahydropyrimidin in 100 ml trockenem Toluol tropfenweise zu, so dass die Temperatur unter 35°C bleibt. Anschliessend wird die Mischung während 10 h bei Raumtemperatur gerührt und dann das Lösungsmittel bei 100°C/0,1 mbar am Rotationsverdampfer abgezogen. Das Produkt wird als viskoses Material mit den folgenden Analysendaten erhalten.

Viskosität (nach Epprecht): $\eta_{80}$ = 66500 mPa·s

$^1$H-NMR ($CDCl_3$, ausgewählte Signale): δ 7,59 (d, J = 6 Hz, C$\underline{H}$ = N); 6,15 - 5,60 (br, N-CO-N$\underline{H}$ + S-CO-N$\underline{H}$); 3,57 (s, OC$\underline{H_3}$); 2,41 (qd, J = 7 Hz, 6 Hz, $(CH_3)_2C\underline{H}$); 1,08 (d, J = 7 Hz, C$\underline{H_3}$). $^{13}$C-NMR ($CDCl_3$, ausgewählte Signale): δ 170,1 ($\underline{C}$H = N); 167,4 (N-$\underline{C}$O-S); 159,4 (N-$\underline{C}$O-N); 156,6 (Isocyanuratring); 56,9 ($\underline{C}H_2$-N=C); 50,4

(O$\underline{C}H_3$); 46,1 ($\underline{C}H_2N(CH_3)CO$-N); 34,0 (N-$\underline{C}H_3$); 19,2 (C($\underline{C}H_3)_2$); 8,7 (Si-$\underline{C}H_2$).

| Elementaranalyse: | $C_{44}H_{86}N_8O_{12}S_2Si_2$ | gef. | ber. |
|---|---|---|---|
| | % C | 51,60 | 50,84 |
| | % H | 8,68 | 8,34 |
| | % N | 11,40 | 10,78 |
| | % S | 5,73 | 6,17 |

Beispiel 5:

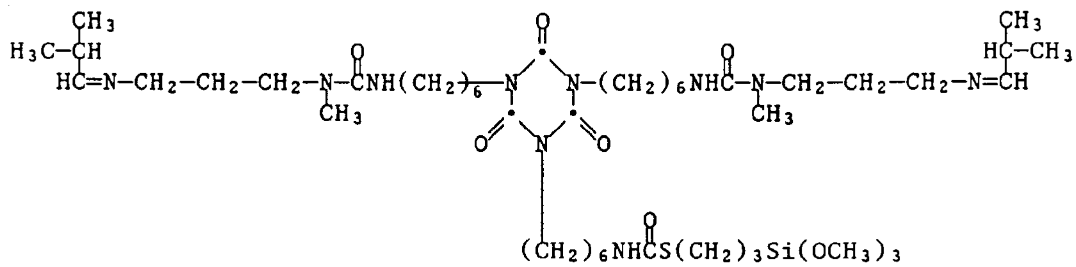

Es wird entsprechend Beispiel 4 gearbeitet. Umgesetzt werden 50 g (0,257 Mol NCO) partiell trimerisiertes Hexamethylendiisocyanat mit einem Isocyanatgehalt von 21,6 % (Desmodur® N 3200 der Firma Bayer AG), 16,8 g (0,0857 Mol) 3-Mercaptopropyltrimethoxysilan und 24,4 g (0,171 Mol) 1-Methyl-2-(1-methylethyl)hexahydropyrimidin. Es wird ein viskoses Material mit den folgenden Analysendaten erhalten:

Viskosität (nach Epprecht): $\eta_{80}$= 56300 mPa·s

$^1$H-NMR ($CDCl_3$, ausgewählte Signale: δ 7,59 (d, J = 6 Hz, C$\underline{H}$ = N); 6,12 - 5,50 (br, N-CO-N$\underline{H}$ + S-CO-N$\underline{H}$); 3,56 (s, OC$\underline{H_3}$); 2,88 (s, N-C$\underline{H_3}$); 2,41 (qd, J = 7 Hz, 6 Hz, $(CH_3)_2C\underline{H}$); 1,08 (d, J = 7 Hz, C$\underline{H_3}$).

$^{13}$C-NMR ($CDCl_3$, ausgewählte Signale): δ 169,9 ($\underline{C}$H = N); 167,2 (N-$\underline{C}$O-S); 159,3 (N-$\underline{C}$O-N); 156,6 (Isocyanuratring); 56,9 ($\underline{C}H_2$-N=C); 50,4 (O$\underline{C}H_3$); 46,1 ($\underline{C}H_2N(CH_3)CO$-N); 34,0 (N-$\underline{C}H_3$): 19,2 (C($\underline{C}H_3)_2$); 8,7 (Si-$\underline{C}H_2$).

| Elementaranalyse: | $C_{46}H_{88}N_{10}O_9SSi$: | gef. | ber. |
|---|---|---|---|
| | % C | 56,21 | 56,07 |
| | % H | 9,23 | 9,00 |
| | % N | 14,78 | 14,21 |
| | % S | 3,10 | 3,25 |

Beispiel 6:

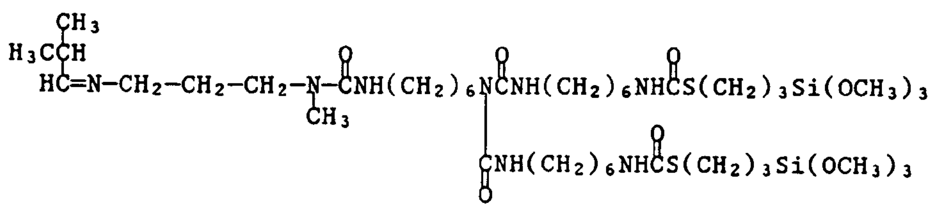

Es wird entsprechend Beispiel 4 gearbeitet. Umgesetzt werden 50 g (0,255 Mol NCO) biurethaltiges partiell hydrolysiertes Hexamethylendiisocyanat mit einem Isocyanatgehalt von 21,3 % (Desmodur® N 100 der Firma Bayer AG), 33,5 g (0,17 Mol) 3-Mercaptopropyltrimethoxysilan und 12 g (0,085 Mol) 1-Methyl-2-(1-methylethyl)-hexahydropyrimidin. Es wird ein viskoses Produkt mit folgenden Analysendaten erhalten:

Viskosität (nach Epprecht): $\eta_{40}$= 88320 mPa·s

$^1$H-NMR ($CDCl_3$, ausgewählte Signale): δ 7,59 (d, J = 6 Hz, C$\underline{H}$ = N); 6,20 - 5,60 (br, N-CO-N$\underline{H}$ + S-CO-N$\underline{H}$);

3,57 (s, OC$\underline{H}_3$); 2,89 (s, N-C$\underline{H}_3$); 2,41 (qd, J = 7 Hz, 6 Hz $(CH_3)_2C\underline{H}$); 1,08 (d, J = 7 Hz, C$\underline{H}_3$).

| Elementaranalyse: | $C_{43}H_{97}N_8O_{11}S_2Si_2$ | gef. | ber. |
|---|---|---|---|
| | % C | 51,22 | 50,51 |
| | % H | 8,76 | 9,56 |
| | % N | 11,28 | 10,96 |
| | % S | 5,59 | 6,27 |

Beispiel 7:

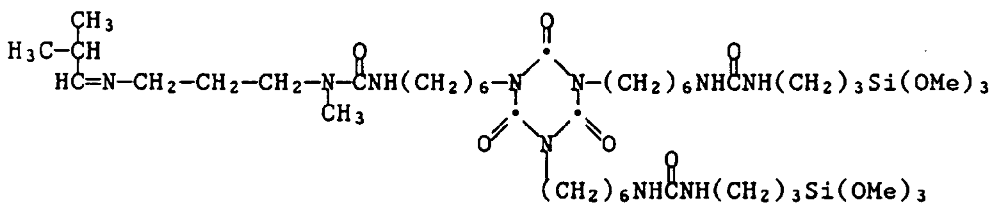

Eine Lösung von 50 g (0,257 Mol) partiell trimerisiertem Hexamethylendiisocyanat mit einem Isocyanatgehalt von 21,6 % (Desmodur® N 3200 der Firma Bayer AG) in 50 ml trockenem Toluol wird in ein mit einem mechanischen Rührer, einem Tropftrichter und einem Thermometer versehenes Gefäss unter Stickstoffatmosphäre gebracht und diese in ein Eisbad getaucht. Nun wird eine Lösung von 30,6 g (0,171 Mol) 3-Aminopropyltrimethoxysilan in trockenem Toluol zugetropft. Eine exotherme Reaktion beginnt unmittelbar; die Zutropfgeschwindigkeit wird so eingestellt, dass die Temperatur unter 30°C gehalten wird. Nach Beendigung der Zugabe wird die Mischung 1 h bei Raumtemperatur gerührt und anschliessend während 1 h auf 50°C erwärmt. Darauf lässt man die Mischung auf Raumtemperatur abkühlen und tropft eine Lösung von 12,2 g (0,0857 Mol) 1-Methyl-2-(1-methylethyl)-hexahydropyrimidin in 100 ml trockenem Toluol zu. Nach Beendigung der Zugabe wird währen 1 h bei Raumtemperatur gerührt, worauf das Lösungsmittel bei 100°C/0,1 mbar am Rotationsverdampfer abgezogen wird. Es wird ein Produkt mit den folgenden Analysendaten erhalten:

Viskosität (nach Epprecht): $\eta_{80}$= 39040 mPa·s

$^1$H-NMR (CDCl$_3$, ausgewählte Signale): δ 7,59 (d, J = 6 Hz, C$\underline{H}$ = N), 6,15 - 5,05 (br, N-CO-N$\underline{H}$), 3,57 (s, OC$\underline{H}_3$), 2,88 (s, N-C$\underline{H}_3$); 2,41 (qd, J = 7 Hz, 6 Hz, $(CH_3)_2C\underline{H}$), 1,08 (d, J = 7 Hz, C$\underline{H}_3$).

| Elementaranalyse: | $C_{44}H_{88}N_{10}O_{12}Si_2$ | gef. | ber. |
|---|---|---|---|
| | % C | 53,38 | 52,59 |
| | % H | 9,05 | 8,76 |
| | % N | 14,35 | 13,94 |

Beispiel 8:

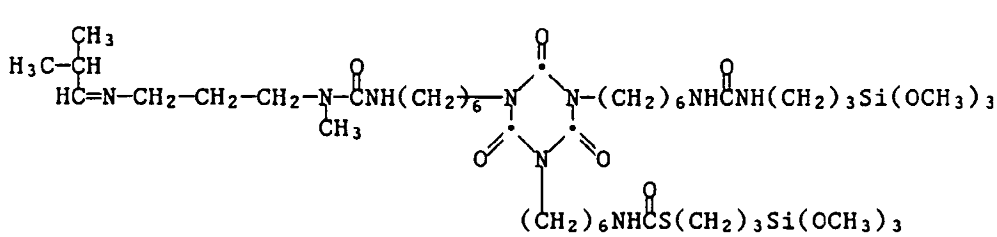

Ein Gemisch aus 50 g (0,257 Mol NCO) partiell trimerisiertem Hexamethylendiisocyanat mit einem Isocyanatgehalt von 21,6 % (Desmodur® N 3200 der Firma Bayer AG) und 16,8 g (0,0857 Mol) 3-Mercaptopropyltrimethoxysilan wird 60 Minuten bei 140°C erhitzt, wonach man auf Raumtemperatur abkühlen lässt. Nun gibt man eine Lösung von 15,3 g (0,0857 Mol) 3-Aminopropyltrimethoxysilan in 50 ml trockenem

Toluol tropfenweise zu, so dass die Temperatur unter 35°C gehalten wird. Nach Beendigung der Zugabe wird das Gemisch bei Raumtemperatur während 2 h gerührt. Danach wird eine Lösung von 12,2 g (0,0857 Mol) 1-Methyl-2-(1-methylethyl)-hexahydropyrimidin in 100 ml trockenem Toluol zugetropft, so dass die Temperatur unter 35°C gehalten wird. Nach Beendigung der Zugabe wird bei Raumtemperatur während 2 h gerührt und anschliessend das Lösungsmittel bei 100°C/0,1 mbar am Rotationsverdampfer abgezogen. Es wird ein viskoses Produkt mit den folgenden Analysendaten erhalten:

Viskosität (nach Epprecht): $\eta_{80}$= 102 400 mPa·s

$^1$H-NMR ($CDCl_3$, ausgewählte Signale): δ 7,59 (d, J = 6 Hz,CH = N); 6,20 - 5,05 (br, N-CO-NH + S-CO-NH); 3,57 (s, $OCH_3$); 2,88 (s, N-$CH_3$); 2,41 (qd, J = 7 Hz, 6 Hz, $(CH_3)_2CH$); 1,08 (d, J = 7 Hz, $CH_3$).

| Elementaranalyse: $C_{44}H_{87}N_9O_{12}SSi_2$ | gef. | ber. |
|---|---|---|
| % C | 52,17 | 51,69 |
| % H | 8,75 | 8,58 |
| % N | 12,97 | 12,33 |
| % S | 2,93 | 3,14 |

Beispiel 9:

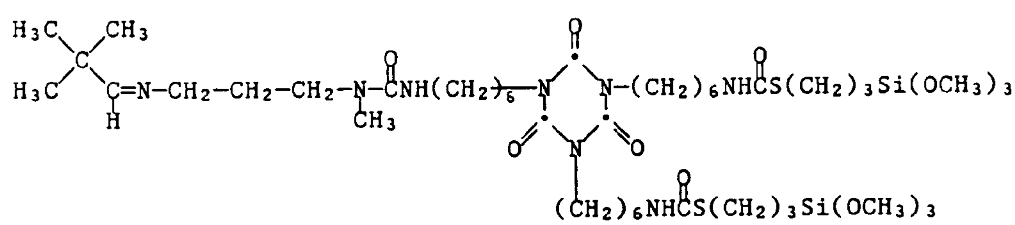

Es wird entsprechend Beispiel 4 gearbeitet. Umgesetzt werden 200 g (1,028 Mol NCO) partiell trimerisiertes Hexamethylendiisocyanat mit einem Isocyanatgehalt von 21,6 % (Desmodur® N3200 der Firma Bayer AG), 134,8 g (0,684 Mol) 3-Mercaptopropyltrimethoxysilan und 53,7 g (0,343 Mol) N-Methyl-3-(2,2-dimethylpropylimino)-propylamin.

Viskosität (nach Epprecht): $\eta_{80}$= 6080 mPa·s

$^1$H-NMR ($CDCl_3$, ausgewählte Signale): δ 7,56 (br.s, CH = N); 6,20 - 5,70 (br, N-CO-NH + S-CO-NH); 3,56 (s, $OCH_3$); 1,07 (s, $CH_3$). $^{13}$C-NMR ($CDCl_3$, ausgewählte Signale): 172,0 (CH=N); 166,7 (NH-CO-S); 159,0 (N-CO-NH); 156,0 (Isocyanuratring); 50,2 ($OCH_3$); 35,9 ($C(CH_3)_3$); 33,7 (N-$CH_3$); 26,6 ($CH_3$).

| Elementaranalyse: $C_{45}H_{88}N_8O_{12}S_2Si_2$ | gef. | ber. |
|---|---|---|
| % C | 51,85 | 51,30 |
| % H | 8,64 | 8,42 |
| % N | 11,48 | 10,64 |

Beispiel 10:

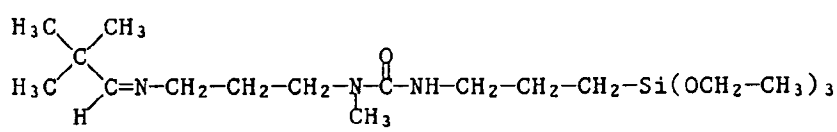

Eine Lösung von 23,8 g (0,096 Mol) Isocyanatopropyltriethoxysilan in 30 ml trockenem Toluol wird zu einer Lösung von 15 g (0,096 Mol) N-Methyl-3-(2,2-dimethylpropylimino)-propylamin in 20 ml trockenem Toluol zugetropft und die Mischung bei Raumtemperatur während 1 h gerührt. Dann wird das Lösungsmittel bei 90°C/0,1 mbar am Rotationsverdampfer abgezogen und man erhält 35,7 g einer farblosen Flüssigkeit mit den folgenden Analysendaten:

Viskosität (nach Epprecht): $\eta_{25}$= 120 mPa·s
$^1$H-NMR ($CDCl_3$): δ 7,52 (br.s, CH=N); 6,03 (br, N-CO-NH); 3,39 - 3,05 (m, 8 H); 3,77 (q, J = 7,0 Hz, $OCH_2$); 2,85 (s, $CH_3$-N) 1,79 - 1,48 (m, 2 H); 1,18 (t, J = 7,0 Hz, $OCH_2CH_3$); 1,04 (s, $CH_3$); 0,66 - 0,99 (m, $CH_2$-Si). $^{13}$C-NMR ($CDCl_3$): δ 171,8; 158,8; 57,9; 56,3; 45,4; 43,2; 35,8; 33,5; 29,3; 26,5; 23,6; 18,0; 7,4.

| Elementaranalyse: | $C_{19}H_{41}N_3O_4Si$ | gef. | ber. |
|---|---|---|---|
| | % C | 56,14 | 56,57 |
| | % H | 10,09 | 10,17 |
| | % N | 10,33 | 10,42 |

Beispiel 11:

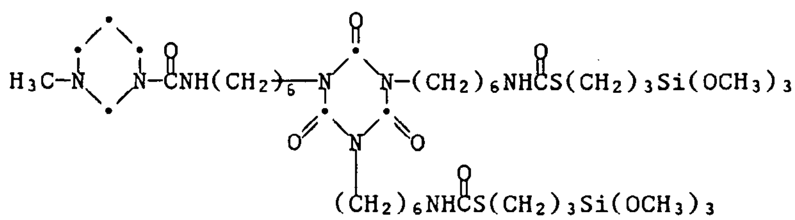

Es wird entsprechend Beispiel 4 gearbeitet. Umgesetzt werden 50 g (0,257 Mol NCO) partielle trimerisiertes Hexamethylendiisocyanat mit einem Isocyanatgehalt von 21,6 % (Desmodur® N 3200 der Firma Bayer AG), 33,7 g (0,171 Mol) 3 Mercaptopropyltrimethoxy-silan und 8,6 g (0,0857 Mol) 1-Methylhexahydropyrimidin. Es wird ein Produkt mit folgenden Analysendaten erhalten:
Viskosität (nach Epprecht): $\eta_{80}$= 28160 mPa·s
$^1$H-NMR ($CDCl_3$, ausgewählte Signale): δ 6,15 - 5,70 (br, S-CO-NH); 5,20 - 4,90 (br, N-CO-NH); 3,90 (s, N-$CH_2$-N); 3,56 (s, $OCH_3$); 2,26 (s, N-$CH_3$).
$^{13}$C-NMR ($CDCl_3$, ausgewählte Signale): δ 167,1 (NH-CO-S); 157,5 (N-CO-N); 156,4 (Isocyanuratring); 67,8 (N-$CH_2$-N); 50,4 ($OCH_3$); 42,0 (N-$CH_3$); 8,5 ($CH_2$-Si).

| Elementaranalyse: | $C_{41}H_{80}N_8O_{12}S_2Si_2$ | gef. | ber. |
|---|---|---|---|
| | % C | 50,58 | 49,37 |
| | % H | 8,50 | 8,08 |
| | % N | 12,15 | 11,23 |
| | % S | 5,93 | 6,43 |

Beispiel 12

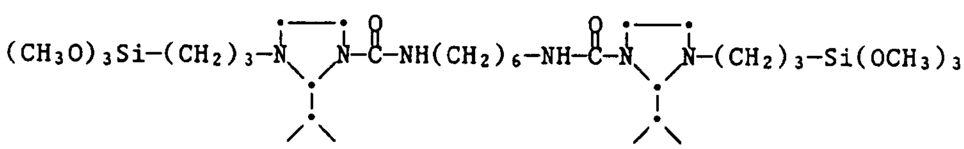

Eine Lösung von 3 g (0,018 Mol) Hexmethylendiisocyanat in 50 ml trockenem Toluol wird unter Rühren zu einer Lösung von 10 g (0,036) 1-[3-(Trimethoxysilyl)propyl]-2-(1-methylethyl)-imidazolidin in 50 ml trockenem Toluol zugetropft. Danach wird während 2 h weitergerührt und anschliessend das Lösungsmittel bei 90°C/0,1 mbar am Rotationsverdampfer abgezogen, worauf man 13 g eines viskosen Materials mit der obigen Struktur[2] und den folgenden Analysendaten erhält:

[2] Ca. 15 % der offenen Struktur kann durch $^1$H-NMR nachgewiesen werden.

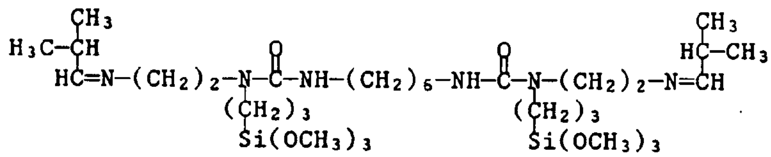

Viskosität (nach Epprecht): $\eta_{25}$= 80250 mPa·s
$^1$H-NMR ($CDCl_3$, ausgewählte Signale): δ 4,39 (br.t, N-CO-N<u>H</u>); 4,27 (d, J = 6,4 Hz, N-C<u>H</u>-N); 3,56 (s, OC<u>H</u>$_3$); 0,74 - 0,55 (m, C<u>H</u>$_2$-Si).

| Elementaranalyse: | $C_{32}H_{68}N_6O_8Si_2$ | gef. | ber. |
|---|---|---|---|
| | % C | 53,07 | 53,30 |
| | % H | 9,43 | 9,51 |
| | % N | 11,65 | 11,65 |

Beispiel 13:

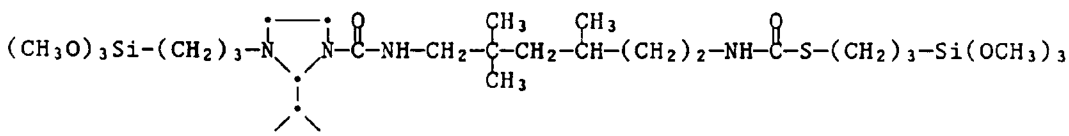

Eine Lösung von 5 g (0,018 Mol) 1-[3-(Trimethoxysilyl)propyl]-2-(1-methylethyl)-imidazolidin in 50 ml trockenem Toluol wird unter Rühren zu einer Lösung von 8,1 g (0,018 Mol) des Produkts von Beispiel H in 50 ml trockenem Toluol zugetropft. Danach wird bei Raumtemperatur während 24 h weitergerührt und anschliessend das Lösungsmittel bei 95°C/0,1 mbar am Rotationsverdampfer abgezogen, worauf man 13 g eines Produkts mit der obigen Struktur[3] und den folgenden Analysedaten erhält:
Viskosität (nach Epprecht): $\eta_{25}$= 68200 mPa·s
$^1$H-NMR ($CDCl_3$, ausgewählte Signale): δ 4,50 (br, N-CO-N<u>H</u>); 6,15 (br, N<u>H</u>-CO-S), 4,27 (d, J = 6,4 Hz, N-C<u>H</u>-N), 3,56 (s, OC<u>H</u>$_3$).

| Elementaranalyse: | $C_{29}H_{62}N_4O_8SSi_2$ | gef. | ber. |
|---|---|---|---|
| | % C | 50,78 | 50,95 |
| | % H | 9,13 | 9,08 |
| | % N | 8,15 | 8,19 |
| | % S | 4,19 | 4,70 |

Beispiel 14:

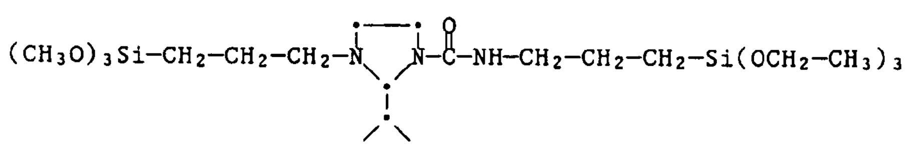

Eine Lösung von 15,0 g (0,054 Mol) 1-[3-(Trimethoxysilyl)propyl]-2-(1-methylethyl)-imidazolidin in 30 ml trockenem Toluol wird unter Rühren zu einer Lösung von 13,4 g (0,054 Mol) Isocyanatopropyltriethoxysilan in 30 ml trockenem Toluol gegeben, worauf bei Raumtemperatur 3 h weitergerührt wird. Anschliessend wird bei

[3] Ca. 15 % der offenen Struktur kann durch $^1$H-NMR nachgewiesen werden. (Analog Bsp. 12).

95°C/0,1 mbar das Lösungsmittel am Rotationsverdampfer abgezogen und man erhält 27 g eines Produkts mit der obigen Struktur[4] und den folgenden Analysedaten:
Viskosität (nach Epprecht): $\eta_{25}$= 1952 mPa·s $^1$H-NMR ($CDCl_3$): δ 4,47 (br, N-CO-N<u>H</u>); 4,27 (d, J = 6,4 Hz, N-C<u>H</u>-N); 3,81 (q, J = 7,0 Hz, 0C<u>H</u>$_2$); 3,56 (s, OC<u>H</u>$_3$); 3,34 - 2,82 (m, 8 H); 2,54 - 2,15 (m, 2 H); 1,91 - 1,56 (m, 3 H); 1,22 (t, J = 7,0 Hz, $OCH_2$-C<u>H</u>$_3$); 1,02 - 0,89 (m, C(C<u>H</u>$_3$)); 0.71 - 0,55 (m, C<u>H</u>$_2$-Si).
$^{13}$C-NMR ($CDCl_3$): δ 156,9; 84,2; 57,9; 57,7; 51,4; 50,0; 44,0; 42,7; 32,5; 23,2; 22,2; 18,5; 17,8; 7,2; 6,8.

| Elementaranalyse: | $C_{22}H_{49}N_3O_7Si_2$ | gef. | ber. |
|---|---|---|---|
| | % C | 50,97 | 50,45 |
| | % H | 9,31 | 9,43 |
| | % N | 8,87 | 8,02 |

Beispiel 15

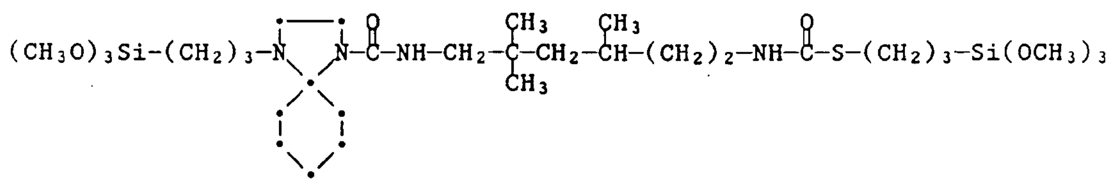

Eine Lösung von 13 g (0,044 Mol) 1-[3-(Trimethoxysilyl)propyl]-2-pentamethylen-imidazolidin in 100 ml trockenem Toluol wird unter Rühren zu einer Lösung von 20 g (0,044 Mol) des Produkts von Beispiel H in 100 ml trockenem Toluol zugetropft. Danach wird bei Raumtemperatur während 2 h weitergerührt und anschliessend das Lösungsmittel bei 95°C/0,1 mbar am Rotationsverdampfer abgezogen, worauf man ein Produkt der obigen Struktur[5] und den folgenden Analysedaten erhält:
Viskosität (nach Epprecht): $\eta_{25}$= 76800 mPa·s

| Elementaranalyse: | $C_{31}H_{65}N_4O_8SSi$ | gef. | ber. |
|---|---|---|---|
| | % C | 52,43 | 52,49 |
| | % H | 9,23 | 8,97 |
| | % N | 7,89 | 8,04 |
| | % S | 4,51 | 4,72 |

Beispiel 16:

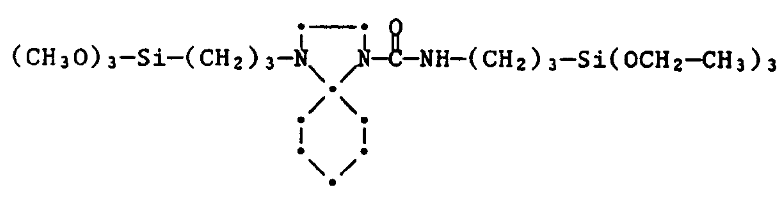

Eine Lösung von 15 g (0,049 Mol) 1-[3-(Trimethoxysilyl)propyl]-2-pentamethylen-imidazolidin in 30 ml trockenem Toluol wird unter Rühren zu einer Lösung von 12,3 g (0,049 Mol) Isocyanatopropyltriethoxysilan in 30 ml trockenem Toluol zugetropft. Danach wird bei Raumtemperatur während 3 h weitergerührt und anschliessend das Lösungmittel bei 95°C/0,1 mbar am Rotationsverdampfer abgezogen, worauf man 27 g eines Produkts der obigen Struktur[6] und den folgenden Analysendaten erhält:
Viskosität (nach Epprecht): $\eta_{25}$= 2400 mPa·s

[4] 20 % der offenen Struktur kann durch $^1$H-NMR nachgewiesen werden. (Analog Bsp. 12)
[5] Es kann ebenfalls die offene Struktur (analog Bsp. 12) nachgewiesen werden.
[6] Es kann ebenfalls die offene Struktur (analog Bsp. 12) nachgeweisen werden.

| Elementaranalyse: | $C_{24}H_{51}N_3O_7Si_2$ | gef. | ber. |
|---|---|---|---|
| | % C | 51,65 | 52,43 |
| | % H | 8,89 | 9,35 |
| | % N | 8,32 | 7,64 |

Beispiel 17:

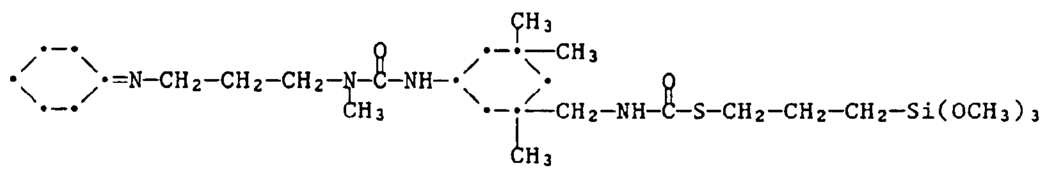

Ein Gemisch von 72,4 g (0,326 Mol) Isophorondiisocyanat und 64,0 g (0,326 Mol) 3-Mercaptopropyltrimethoxysilan werden während 60 Minuten auf 140°C erhitzt, worauf man auf Raumtemperatur erkalten lässt und anschliessend eine Lösung von 54,8 g (0,326 Mol) 1-Methyl-2-pentamethylen-hexahydropyrimidin langsam zugibt, so dass die Temperatur unter 35°C gehalten wird. Danach wird während 30 Minuten weitergerührt und anschliessend bei 100°C/0,1 mbar das Lösungsmittel am Rotationsverdampfer abgezogen, worauf man 188,6 g eines Produkts mit den folgenden Analysendaten erhält:
Schmelzpunkt: 40°C

| Elementaranalyse: | $C_{28}H_{54}N_4O_5SSi$ | gef. | ber. |
|---|---|---|---|
| | % C | 56,79 | 57,30 |
| | % H | 9,54 | 9,27 |
| | % N | 9,91 | 9,55 |
| | % S | 5,48 | 5,46 |

Beispiel 18:

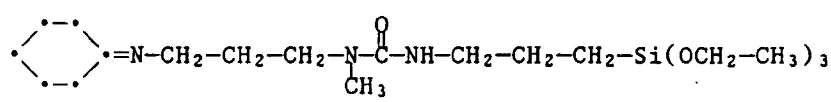

Eine Lösung von 28,7 g (0,116 Mol) Isocyanatopropyltriethoxysilan in 50 ml trockenem Toluol wird zu einer Lösung von 20,0 g (0,119 Mol) 1-Methyl-2-pentamethylen-hexahydropyrimidin in 50 ml trockenem Toluol zugetropft, so dass die Temperatur unter 35°C gehalten wird. Nach Beendigung der Zugabe wird bei Raumtemperatur während 7 h weitergerührt, worauf das Lösungsmittel bei 100°C/0,1 mbar am Rotationsverdampfer abgezogen wird und man 46,8 g einer gelben Flüssigkeit mit den folgenden Analysendaten erhält:
Viskosität (nach Epprecht): $\eta_{25}$= 80 mPa·s
$^{13}C$-NMR ($CDCl_3$): δ 172,9; 158,7; 57,9; 45,5; 44,9; 43,1; 39,5; 33,6 28,9; 28,3; 27,3; 26,5; 25,6; 23,4; 17,8; 7,6.

| Elementaranalyse: | $C_{20}H_{41}N_3O_4Si$ | gef. | ber. |
|---|---|---|---|
| | % C | 57,54 | 57,79 |
| | % H | 9,86 | 9,94 |
| | % N | 10,59 | 10,11 |

Beispiel 19:

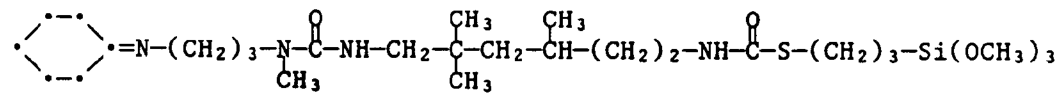

Ein Gemisch aus 150 g (0,714 Mol) frisch destilliertem 1,6-Diisocyanato-2,2,4-trimethylhexan und 140 g (0,714 Mol) 3-Mercaptopropyltrimethoxysilan wird unter Stickstoffatmosphäre während 2 h auf 140°C erhitzt, worauf man auf Raumtemperatur erkalten lässt. Danach wird eine Lösung von 120 g (0,714 Mol) 1-Methyl-2-pentamethylen-hexahydropyrimidin in 200 ml trockenem Toluol zugetropft, so dass die Temperatur unter 35°C gehalten wird. Nach Beendigung der Zugabe wird das Gemisch bei Raumtemperatur während 45 Minuten weitergerührt, worauf das Lösungsmittel bei 100°C/0,1 mbar am Rotationsverdampfer abgezogen wird und man 380 g eines Produkts mit den folgenden Analysendaten erhält:
Schmelzpunkt: 35°C

| Elementaranalyse: | $C_{27}H_{54}N_4O_5SSi$ | gef. | ber. |
|---|---|---|---|
| | % C | 57,27 | 56,36 |
| | % H | 9,64 | 9,36 |
| | % N | 9,95 | 9,74 |
| | % S | 3,12 | 3,35 |

Beispiel 20:

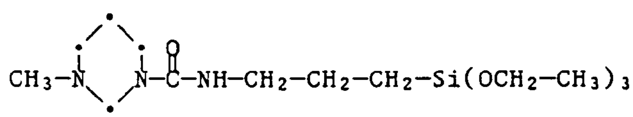

Eine Lösung von 24,7 g (0,0998 Mol) Isocyanatopropyltriethoxysilan in 30 ml trockenem Toluol wird zu einer Lösung von 10,0 g (0,0998 Mol) 1-Methylhexahydropyrimidin in 30 ml trockenem Toluol zugetropft, worauf die Mischung während 2 h bei Raumtemperatur gerührt wird. Anschliessend wird das Lösungsmittel bei 90°C/0,1 mbar am Rotationsverdampfer abgezogen, wobei 24,2 g einer farblosen Flüssigkeit mit den folgenden Analysendaten erhalten werden.
Viskosität (nach Epprecht): $\eta_{25}$= 400 mPa·s
$^1$H-NMR ($CDCl_3$): δ 4,94 (br.t, N-CO-N<u>H</u>); 3,90 (s,N-C$H_2$-N); 3,81 (q, J = 7,0 Hz, OC$H_2$); 3,36 (t, J = 5,8 Hz, 2 H); 3,31 - 3,13 (m, 4 H); 2,59 (t, J = 5,8 Hz); 2,26 (s, N-C$H_3$); 1,64 (p, J = 5,8 Hz, 2 H); 1,22 (t, J = 7,0 Hz, C$H_3$); 0,63 (t, J = 7,2 Hz, C$H_2$-Si).
$^{13}$C-NMR ($CDCl_3$): δ 157,0; 67,3; 57,7; 54,2; 43,2; 43,0; 41,4; 23,3; 23,0; 17,7; 7,2.

| Elementaranalyse: | $C_{15}H_{33}N_3O_4Si$ | gef. | ber. |
|---|---|---|---|
| | % C | 51,67 | 51,84 |
| | % H | 9,52 | 9,57 |
| | % N | 11,72 | 12,09 |

Beispiel 21:

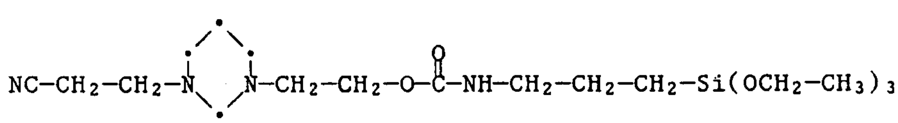

Eine Lösung von 4,86 g (0,0196 Mol) Isocyanatopropyltriethoxysilan in 30 ml trockenem Toluol wird zu einer

Lösung von 3,6 g (0,0196 Mol) 1-(2-hydroxyethyl)-3-(2-cyanoethyl)-hexahydropyrimidin in 30 ml trockenem Toluol bei 100°C zugetropft, worauf die Mischung während 1,5 h bei 100°C weitergerührt wird. Anschliessend wird das Lösungsmittel bei 90°C/0,1 mbar am Rotationsverdampfer abgezogen und man erhält 8,2 g einer farblosen Flüssigkeit mit den folgenden Analysendaten:
Viskosität (nach Epprecht): $\eta_{25}$ = 440 mPa·s
$^1$H-NMR ($CDCl_3$): δ 5,23 (br.t, N-CO-N<u>H</u>); 4,15 (t, J = 5,8 Hz, C<u>H</u>$_2$-O-CO-NH); 3,81 (q, J = 7,0 Hz, OC<u>H</u>$_2$); 3,32 (s,N-C<u>H</u>$_2$-N); 3,31 - 3,11 (m, 4 H); 2,82 - 2,42 (m, 10 H); 1,68 - 1,45 (m, 2 H); 1,22 (d, J = 7,0 Hz, C<u>H</u>$_3$); 0,61 (t, J = 7,2 Hz, $CH_2$-Si);
$^{13}$C-NMR ($CDCl_3$): δ 155,8; 118,4; 74,4; 61,6; 57,7; 53,0; 51,9; 51,4; 49,4; 42,9; 22,8; 22,0; 17,8; 16,1; 7,1.

| Elementaranalyse: | $C_{19}H_{38}N_4O_5Si$ | gef. | ber. |
|---|---|---|---|
| | % C | 53,18 | 53,00 |
| | % H | 8,98 | 8,90 |
| | % N | 13,00 | 13,01 |

Beispiel 22:

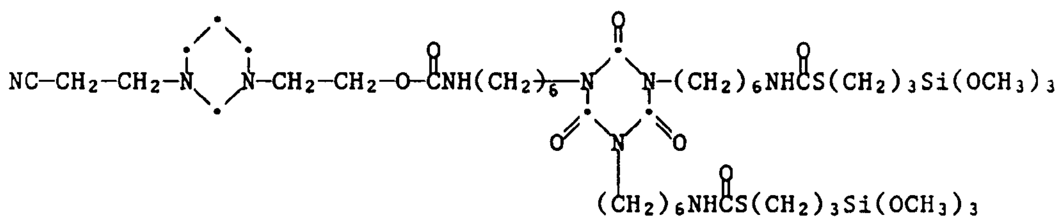

Eine Mischung aus 15,9 g (0,08 Mol NCO) partiell trimerisiertem Hexamethylendiisocyanat mit einem Isocyanatgehalt von 21,6 % (Desmodur® N 3200 der Firma Bayer AG) und 10,7 g (0,054 Mol) 3-Mercaptopropyltrimethoxysilan wird 60 Minuten bei 140°C erhitzt, worauf man die Mischung auf 100°C abkühlen lässt und dann 5,0 g 1-(2-Hydroxyethyl)-3-(2-cyanoethyl)-hexahydropyrimidin zutropft, worauf bei gleicher Temperatur während 5 h gerührt wird. Das Lösungsmittel wird anschliessend bei 95°C/0,1 mbar am Rotationsverdampfer abgezogen und man erhält ein Produkt mit den folgenden Analysendaten:
Viskosität (nach Epprecht): $\eta_{80}$= 7680 mPa·s
$^1$H-NMR ($CDCl_3$, ausgewählte Signale): δ 6,10 - 5,60 (br, S-CO-N<u>H</u>); 5,20 - 4,90 (br, O-CO-N<u>H</u>); 4.15 (t, J = 5,8 Hz, C<u>H</u>$_2$-O-CO-N); 3,56 (s, OC<u>H</u>$_3$); 3,32 (s, N-C<u>H</u>$_2$-N).
$^{13}$C-NMR ($CDCl_3$, ausgewählte Signale): δ 168,8 (N-<u>C</u>O-S);
156,3 (O-<u>C</u>O-NH); 156,1 (Isocyanuratring); 118,7 (<u>C</u>N);
74,7 (N-<u>C</u>H$_2$-N); 62,1 (<u>C</u>H$_2$-O-CO-NH); 50,2 (O<u>C</u>H$_3$); 16,3 (<u>C</u>H$_2$-CN); 8,3 (<u>C</u>H$_2$-Si).

| Elementaranalyse: | $C_{45}H_{85}N_9O_{13}S_2Si$ | gef. | ber. |
|---|---|---|---|
| | % C | 51,09 | 50,02 |
| | % H | 8,26 | 7,93 |
| | % N | 12,55 | 11,67 |
| | % S | 5,56 | 5,93 |

Beispiel 23:

A) Präpolymere-Synthese:

Ein isocyanatterminiertes Präpolymer wird hergestellt, indem man bei 80°C zu 150 g Methylendiphenyldiisocyanat (Isonate® M125 der Firma Upjohn) innerhalb 1 Stunde ein Gemisch aus 531 g trockenem bishydroxylterminiertem Polypropylenglykol mit dem Molekulargewicht 2000 (Desmophen® 1900U der Firma Bayer AG) und 0,3 ml Dibutylzinndilaurat zufliessen lässt. Dann versetzt man mit 2,7 g Trimethylolpropan und rührt weitere 2 Stunden bei 80°C bis sich ein isocyanatterminiertes Präpolymer mit einem Isocyanatgehalt von

2,4 % gebildet hat.

B) Haftung auf Glas

Zu dem unter A erhaltenen Präpolymeren werden 5 % trockene pyrogene Kieselsäure (Aerosil 380) und 5 % Haftvermittler gemäss Tabelle 1. Dann giesst man auf eine Glasplatte eine 5 mm dicke Polyurethanschicht. Nach zwei Wochen Lagerung an der Luft lagert man diese Proben zwei Wochen in Wasser bei Raumtemperatur. Die Ergebnisse sind in Tabelle 1 zusammengestellt, wobei (--) bedeutet, dass die Schicht leicht abgezogen werden kann und die Glasoberfläche sauber bleibt; (-) bedeutet, dass die Schicht mit Mühe abgezogen werden kann und die Glasoberfläche sauber bleibt; (+/-) bedeutet, dass das meiste der Schicht auf der Glasoberfläche durch Kratzen mit einem Messer entfernt werden kann; (+) bedeutet, dass das meiste der Schicht trotz Kratzen mit einem Messer auf der Glasoberfläche haften bleibt; (++) bedeutet, dass die ganze Schicht trotz Kratzen mit einem Messer auf der Glasoberfläche haften bleibt.

Tabelle 1

| Haftvermittler gemäss Beispiel | Haftung auf dem Glas |
|---|---|
| kein Haftvermittler | -- |
| 1 | ++ |
| 2 | ++ |
| 4 | ++ |
| 5[a)] | ++ |
| 6 | ++ |
| 8 | ++ |
| 9 | ++ |
| 10 | ++ |
| 12 | + |
| 13 | ++ |
| 14 | + |
| 15 | + |
| 17 | + |
| 18 | + |

a) 10 % des Haftvermittlers werden eingesetzt

## Patentansprüche

### Patentansprüche für folgende Vertragsstaaten : CH, DE, FR, GB, IT, LI, NL, SE

1. Verbindungen der allgemeinen Formel I

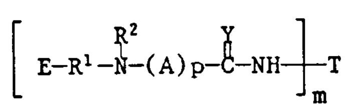

I

worin

$R^1$ $C_2$-$C_3$ Alkylen

$R^2$ Wasserstoff, unsubstituiertes oder durch -OH, -CN oder -$Si(OR^3)_{3-q}R^4_q$ substituiertes $C_1$-$C_6$-Alkyl oder $C_2$-$C_6$-Alkenyl,

$R^3$ $C_1$-$C_4$-Alkyl oder zwei Reste $R^3$ zusammen $C_1$-$C_4$-Alkylen,

$R^4$ $C_1$-$C_4$ Alkyl oder Phenyl und

q die Werte 0 bis 2 bedeuten, sowie

E einen Rest der Formel

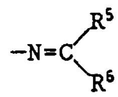

mit

$R^5$ in der Bedeutung von Wasserstoff oder $C_1$-$C_4$-Alkyl und

$R^6$ in der Bedeutung von Wasserstoff oder

$R^5$ und $R^6$ zusammen in der Bedeutung von $C_4$-$C_8$-Alkylen darstellt, oder

E zusammen mit $R^2$ einen Rest der Formel

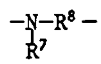

bedeutet, worin

$R^7$ Wasserstoff, $C_1$-$C_4$-Alkyl oder -$R^9$-$Si(OR^3)_{3-q}R^4_q$ mit $R^3$, $R^4$ und q in der vorstehenden Bedeutung ist und

$R^9$ $C_1$-$C_8$-Alkylen bedeutet, und

$R^8$ einen Rest

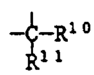

darstellt, worin

$R^{10}$ Wasserstoff oder $C_1$-$C_4$-Alkyl und

$R^{11}$ Wasserstoff oder

$R^{10}$ und $R^{11}$ zusammen $C_4$-$C_8$-Alkylen darstellen,

und

A $\{(CH_2)_r$-$O\}$ mit r gleich 1, 2 oder 3 und p gleich 0 oder 1 und

Y Sauerstoff oder Schwefel bedeuten; ferner

worin

T einen Rest -$R^9$-$Si(OR^3)_{3-q}R^4_q$, einen Rest der Formel

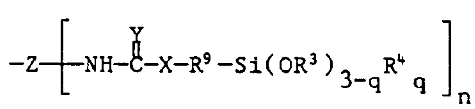

oder, falls $R^7$ einen Rest der Formel -$R^9$-$Si(OR^3)_{3-q}R^4_q$ darstellt und m einen Wert $\geqq$ 2 besitzt, einen m-wertigen Rest Z bedeutet, worin $R^3$, $R^4$, $R^9$, Y und q die vorstehenden Bedeutungen haben,

X -S- oder -NH- ist und

Z ein organischer Rest ist, der sich von einem Polyisocyanat oder einem Polyisothiocyanat mit mindestens 2 NCO- resp. NCS-Gruppen ableitet, und weiter

m einen Wert von $\geqq$ 1 und

n einen Wert von $\geqq$ 1 bedeuten.

2. Verbindungen gemäss Anspruch 1, worin Y = 0 bedeutet.

3. Verbindungen gemäss Anspruch 1 der Formel I, worin Z von einem aliphatischen, cycloaliphatischen, aliphatisch/aromatischen, aromatischen oder heterocyclischen Polyisocyanat oder Polyisothiocyanat mit ≧2 NCO-oder NCS-Gruppen abgeleitet ist, wobei dieser Rest gegebenenfalls eine oder mehrere Ester-, Ether-, Urethan-, Thiourethan-, Isocyanurat-, Harnstoff- oder Biuret-Funktionen enthalten kann.

4. Verbindungen gemäss Anspruch 3 der Formel I, worin Z von einem aliphatischen oder gemischt aliphatisch/aromatischen Polyisocyanat mit ≧ 2 NCO-Gruppen abgeleitet ist, wobei dieser Rest Z gegebenenfalls eine oder zwei Ester-, Ether-, Urethan, Thiourethan, Isocyanurat-, Harnstoff oder Biuret-Funktionen enthält.

5. Verbindungen gemäss Anspruch 1 der Formel I, worin der Rest Z ein mittleres Molekulargewicht $M_n$ < 10000 aufweist.

6. Verbindungen gemäss Anspruch 1, der Formel I, worin n und m unabhängig voneinander die Werte 1 bis 49 besitzen.

7. Verbindungen gemäss Anspruch 1 der Formel I, worin die Summe n + m 2 bis 50 beträgt.

8. Verbindungen gemäss Anspruch 1 der Formel I, worin n die Werte 1, 2 oder 3, und m die Werte 3, 2 oder 1 haben.

9. Verbindungen gemäss Anspruch 1 der Formel I, worin E zusammen mit $R^2$ einen Rest der Formel

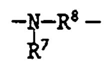

bedeutet und $R^1$ Ethylen darstellt.

10. Verbindungen gemäss Anspruch 1 der Formel I, worin p den Wert 0 besitzt.

11. Verbindungen gemäss Anspruch 1 der Formel I, worin q den Wert 0 besitzt.

12. Verbindungen gemäss Anspruch 1 der Formel I, worin E einen Rest der Formel

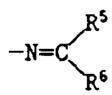

bedeutet.

13. Verbindungen gemäss Anspruch 12 der Formel I, worin $R^5$ Isopropyl oder tert.-Butyl oder $R^5$ zusammen mit $R^6$ Tetramethylen oder Pentamethylen bedeuten.

14. Verbindungen gemäss Anspruch 1 der Formel I, worin T einen Rest der Formeln $-R^9-Si(OR^3)_{3-q}R^4_q$ oder

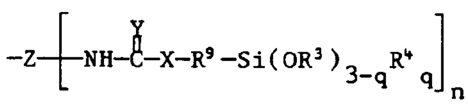

bedeutet.

15. Verbindungen gemäss Anspruch 14 der Formel I, worin mindestens ein Rest X -S- bedeutet.

16. Verbindungen gemäss Anspruch 1 der Formel I, worin p den Wert 0 und m den Wert 1 besitzen, E einen Rest

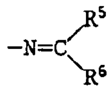

mit $R^5$ in der Bedeutung von $C_3$- oder $C_4$-Alkyl darstellt und $R^2$ $C_1$-$C_4$ Alkyl bedeutet.

**17.** Feuchtigkeitshärtende Polyurethanharze, enthaltend mindestens eine Verbindung der Formel I gemäss Anspruch 1.

**18.** Harz gemäss Anspruch 17, enthaltend 0,1 - 20 Gew.-% einer Verbindung der Formel I.

**Patentansprüche für folgenden Vertragsstaat : ES**

**1.** Verfahren zur Herstellung von Verbindungen der allgemeinen Formel I

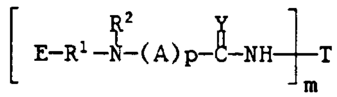 I

worin
$R^1$ $C_2$-$C_3$ Alkylen
$R^2$ Wasserstoff, unsubstituiertes oder durch -OH, -CN oder -$Si(OR^3)_{3-q}R^4_q$ substituiertes $C_1$-$C_6$-Alkyl oder $C_2$-$C_6$-Alkenyl,
$R^3$ $C_1$-$C_4$-Alkyl oder zwei Reste $R^3$ zusammen $C_1$-$C_4$-Alkylen,
$R^4$ $C_1$-$C_4$ Alkyl oder Phenyl und
q die Werte 0 bis 2 bedeuten, sowie
E einen Rest der Formel

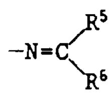

mit
$R^5$ in der Bedeutung von Wasserstoff oder $C_1$-$C_4$-Alkyl und
$R^6$ in der Bedeutung von Wasserstoff oder
$R^5$ und $R^6$ zusammen in der Bedeutung von $C_4$-$C_8$-Alkylen darstellt, oder
E zusammen mit $R^2$ einen Rest der Formel

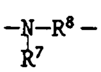

bedeutet, worin
$R^7$ Wasserstoff, $C_1$-$C_4$-Alkyl oder -$R^9$-$Si(OR^3)_{3-q}R^4_q$ mit $R^3$, $R^4$ und q in der vorstehenden Bedeutung ist und
$R^9$ $C_1$-$C_8$-Alkylen bedeutet, und
$R^8$ einen Rest

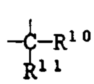

darstellt, worin
$R^{10}$ Wasserstoff oder $C_1$-$C_4$-Alkyl und
$R^{11}$ Wasserstoff oder

$R^{10}$ und $R^{11}$ zusammen $C_4$-$C_8$-Alkylen darstellen,

und

A $\{(CH_2)_r\text{-}O\}$ mit r gleich 1, 2 oder 3 und p gleich 0 oder 1 und

Y Sauerstoff oder Schwefel bedeuten; ferner

worin

T einen Rest $-R^9\text{-}Si(OR^3)_{3\text{-}q}R^4_q$, einen Rest der Formel

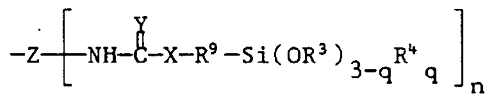

oder, falls $R^7$ einen Rest der Formel $-R^9\text{-}Si(OR^3)_{3\text{-}q}R^4_q$ darstellt und m einen Wert ≧ 2 besitzt, einen m-wertigen Rest Z bedeutet, worin $R^3$, $R^4$, $R^9$, Y und q die vorstehenden Bedeutungen haben,

X -S- oder -NH- ist und

Z ein organischer Rest ist, der sich von einem Polyisocyanat oder einem Polyisothiocyanat mit mindestens 2 NCO- resp. NCS-Gruppen ableitet, und weiter

m einen Wert von ≧ 1 und

n einen Wert von ≧ 1 bedeuten, dadurch gekennzeichnet, dass man m Mole einer Verbindung der Formeln

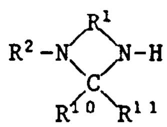 , 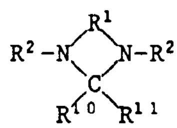 oder 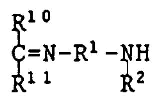 ,

worin die Reste $R^1$, $R^2$, $R^{10}$ und $R^{11}$ die vorstehend definierte Bedeutung haben, mit einer Verbindung der Formeln

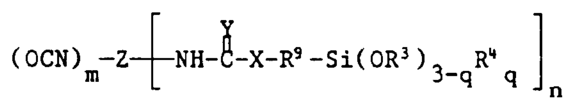

oder

$OCN\text{-}R^9\text{-}Si(OR^3)_{3\text{-}q}R^4_q$,

worin $R^3$, $R^4$, $R^9$, X, Y, Z, m, n und q die vorstehend definierte Bedeutung haben, umsetzt.

2. Verfahren gemäss Anspruch 1, worin Y = 0 bedeutet.

3. Verfahren gemäss Anspruch 1, worin Z von einem aliphatischen, cycloaliphatischen, aliphatisch/aromatischen, aromatischen oder heterocyclischen Polyisocyanat oder Polyisothiocyanat mit ≧ 2 NCO- oder NCS-Gruppen abgeleitet ist, wobei dieser Rest gegebenenfalls eine oder mehrere Ester-, Ether-, Urethan-, Thiourethan-, Isocyanurat-, Harnstoff- oder Biuret-Funktionen enthalten kann.

4. Verfahren gemäss Anspruch 3, worin Z von einem aliphatischen oder gemischt aliphatisch/aromatischen Polyisocyanat mit ≧2 NCO-Gruppen abgeleitet ist, wobei dieser Rest Z gegebenenfalls eine oder zwei Ester-, Ether-, Urethan, Thiourethan, Isocyanurat-, Harnstoff oder Biuret-Funktionen enthält.

5. Verfahren gemäss Anspruch 1, worin der Rest Z ein mittleres Molekulargewicht $M_n$ < 10000 aufweist.

6. Verfahren gemäss Anspruch 1, worin n und m unabhängig voneinander die Werte 1 bis 49 besitzen.

7. Verfahren gemäss Anspruch 1, worin die Summe n + m 2 bis 50 beträgt.

8. Verfahren gemäss Anspruch 1, worin n die Werte 1, 2 oder 3, und m die Werte 3, 2 oder 1 haben.

**9.** Verfahren gemäss Anspruch 1, worin E zusammen mit $R^2$ einen Rest der Formel

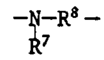

bedeutet und $R^1$ Ethylen darstellt.

**10.** Verfahren gemäss Anspruch 1, worin p den Wert 0 besitzt.

**11.** Verfahren gemäss Anspruch 1, worin q den Wert 0 besitzt.

**12.** Verfahren gemäss Anspruch 1, worin E einen Rest der Formel

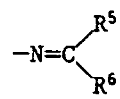

bedeutet.

**13.** Verfahren gemäss Anspruch 12, worin $R^5$ Isopropyl oder tert.-Butyl oder $R^5$ zusammen mit $R^6$ Tetramethylen oder Pentamethylen bedeuten.

**14.** Verfahren gemäss Anspruch 1, worin T einen Rest der Formeln $-R^9-Si(OR^3)_{3-q}R^4{}_q$ oder

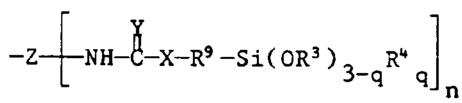

bedeutet.

**15.** Verfahren gemäss Anspruch 14, worin mindestens ein Rest X -S-bedeutet.

**16.** Verfahren gemäss Anspruch 1, worin p den Wert 0 und m den Wert 1 besitzen, E einen Rest

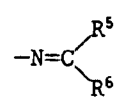

mit $R^5$ in der Bedeutung von $C_3$- oder $C_4$-Alkyl darstellt und $R^2$ $C_1$-$C_4$ Alkyl bedeutet.

**17.** Feuchtigkeitshärtende Polyurethanharze, enthaltend mindestens eine Verbindung der Formel I gemäss Anspruch 1.

**18.** Harz gemäss Anspruch 17, enthaltend 0,1 - 20 Gew.-% einer Verbindung der Formel I.

## Claims

### Claims for the following Contracting States : CH, DE, FR, GB, IT, LI, NL, SE

**1.** A compound of general formula I

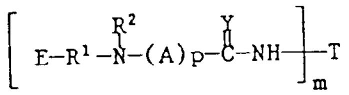 I

wherein
$R^1$ is $C_2$-$C_3$alkylene,
$R^2$ is hydrogen, unsubstituted $C_1$-$C_6$alkyl or $C_1$-$C_6$alkyl substituted by -OH, -CN or by -$Si(OR^3)_{3-q}R^4q$, or $C_2$-$C_6$-alkenyl,
$R^3$ is $C_1$-$C_4$alkyl, or two radicals $R^3$ together are $C_1$-$C_4$alkylene,
$R^4$ is $C_1$-$C_4$alkyl or phenyl, and
q is from 0 to 2, and
E is a radical of the formula

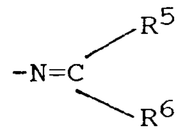

wherein
$R^5$ is hydrogen or $C_1$-$C_4$alkyl and
$R^6$ is hydrogen, or
$R^5$ and $R^6$ together are $C_4$-$C_8$alkylene, or
E together with $R^2$ is a radical of the formula

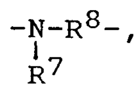

wherein
$R^7$ is hydrogen, $C_1$-$C_4$alkyl or -$R^9$-$Si(OR^3)_{3-q}R^4_q$, wherein
$R^3$, $R^4$ and q are as defined above and
$R^9$ is $C_1$-$C_8$alkylene, and
$R^8$ is a radical

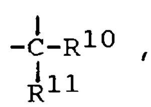

wherein
$R^{10}$ is hydrogen or $C_1$-$C_4$alkyl and
$R^{11}$ is hydrogen, or
$R^{10}$ and $R^{11}$ together are $C_4$-$C_8$alkylene,
and A is $\{(CH_2)_r$-$O\}$, wherein r is 1, 2 or 3,
and p is 0 or 1, and
Y is oxygen or sulfur; and
wherein T is a radical $R^9$-$Si(OR^3)_{3-q}R^4_q$, a radical of the formula

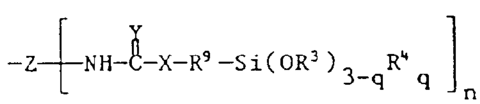

or, when $R^7$ is a radical of the formula -$R^9$-$Si(OR^3)_{3-q}R^4_q$ and m is $\geqq 2$, T is an m-valent radical Z, wherein
$R^3$, $R^4$ $R^9$, Y and q are as defined above,
X is -S- or -NH-, and
Z is an organic radical derived from a polyisocyanate or polyisothiocyanate having at least two NCO or

NCS groups, respectively,
and
m is ≧ 1, and
n is ≧ 1.

2. A compound according to claim 1 wherein Y is O.

3. A compound according to claim 1 of formula I, wherein Z is derived from an aliphatic, cycloaliphatic, aliphatic/aromatic, aromatic or heterocyclic polyisocyanate or polyisothiocyanate having ≧ 2 NCO or NCS groups, this radical optionally containing one or more ester, ether, urethane, thiourethane, isocyanurate, urea or biuret functions.

4. A compound according to claim 3 of formula I, wherein Z is derived from an aliphatic or mixed aliphatic/aromatic polyisocyanate having ≧ 2 NCO groups, this radical Z optionally containing one or two ester, ether, urethane, thiourethane, isocyanurate, urea or biuret functions.

5. A compound according to claim 1 of formula I, wherein the radical Z has a mean molecular weight $M_n$ < 10 000.

6. A compound according to claim 1 of formula I, wherein n and m each independently of the other are from 1 to 49.

7. A compound according to claim 1 of formula I, wherein the sum of n + m is from 2 to 50.

8. A compound according to claim 1 of formula I, wherein n is 1, 2 or 3 and m is 3, 2 or 1.

9. A compound according to claim 1 of formula I, wherein E together with $R^2$ is a radical of the formula

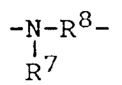

and $R^1$ is ethylene.

10. A compound according to claim 1 of formula I, wherein p is 0.

11. A compound according to claim 1 of formula I, wherein q is 0.

12. A compound according to claim 1 of formula I, wherein E is a radical of the formula

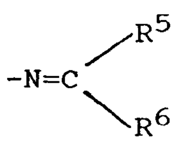

.

13. A compound according to claim 12 of formula I, wherein $R^5$ is isopropyl or tert-butyl or $R^5$ together with $R^6$ is tetramethylene or pentamethylene.

14. A compound according to claim 1 of formula I, wherein T is a radical of the formula $-R^9-Si(OR^3)_{3-q}R^4_q$ or

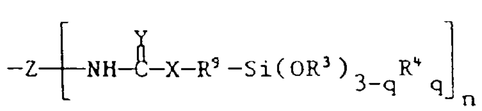

.

15. A compound according to claim 14 of formula I, wherein at least one radical X is -S-.

16. A compound according to claim 1 of formula I, wherein p is O and m is 1, E is a radical

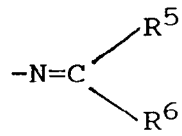

wherein $R^5$ is $C_3$- or $C_4$-alkyl, and $R^2$ is $C_1$-$C_4$alkyl.

**17.** A moisture-curing polyurethane resin comprising at least one compound of formula I according to claim 1.

**18.** A resin according to claim 17 comprising from 0.1 to 20 % by weight of a compound of formula I.

**Claims for the following Contracting State : ES**

**1.** A process for the preparation of a compound of general formula I

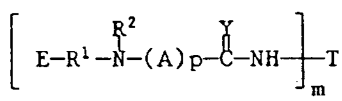

I

wherein
$R^1$ is $C_2$-$C_3$alkylene,
$R^2$ is hydrogen, unsubstituted $C_1$-$C_6$alkyl or $C_1$-$C_6$alkyl substituted by -OH, -CN or by -Si$(OR^3)_{3-q}R^4_q$, or $C_2$-$C_6$-alkenyl,
$R^3$ is $C_1$-$C_4$alkyl, or two radicals $R^3$ together are $C_1$-$C_4$alkylene,
$R^4$ is $C_1$-$C_4$alkyl or phenyl, and
q is from 0 to 2, and
E is a radical of the formula

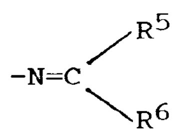

wherein
$R^5$ is hydrogen or $C_1$-$C_4$alkyl and
$R^6$ is hydrogen, or
$R^5$ and $R^6$ together are $C_4$-$C_8$alkylene, or
E together with $R^2$ is a radical of the formula

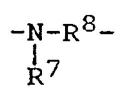 ,

wherein
$R^7$ is hydrogen, $C_1$-$C_4$alkyl or -$R^9$-Si$(OR^3)_{3-q}R^4_q$, wherein
$R^3$, $R^4$ and q are as defined above and
$R^9$ is $C_1$-$C_8$alkylene, and
$R^8$ is a radical

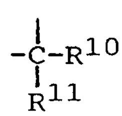 ,

wherein
$R^{10}$ is hydrogen or $C_1$-$C_4$alkyl and
$R^{11}$ is hydrogen, or
$R^{10}$ and $R^{11}$ together are $C_4$-$C_8$alkylene,
and A is $\{(CH_2)_r\text{-}O\}$, wherein r is 1, 2 or 3,
and p is 0 or 1, and
Y is oxygen or sulfur; and
wherein T is a radical $-R^9\text{-}Si(OR^3)_{3-q}R^4_q$, a radical of the formula

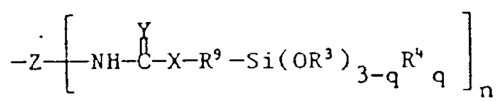

or, when $R^7$ is a radical of the formula $-R^9\text{-}Si(OR^3)_{3-q}R^4_q$ and m is $\geqq 2$, T is an m-valent radical Z, wherein $R^3$, $R^4$, $R^9$, Y and q are as defined above,
X is -S- or -NH-, and
Z is an organic radical derived from a polyisocyanate or polyisothiocyanate having at least two NCO or NCS groups, respectively,
and
m is $\geqq 1$, and
n is $\geqq 1$,
which process comprises reacting m moles of a compound of formula

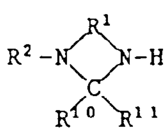 , 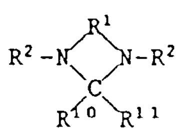 or 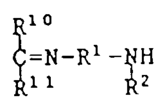 ,

wherein the radicals $R^1$, $R^2$, $R^{10}$ and $R^{11}$ are as defined above, with a compound of formula

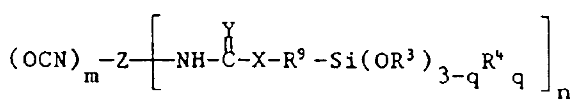 or

$OCN\text{-}R^9\text{-}Si\ (OR^3)_{3-q}R^4_q$,
wherein $R^3$, $R^4$, $R^9$, X, Y, Z, m, n and q are as defined above.

2. A process according to claim 1 wherein Y is 0.

3. A process according to claim 1, wherein Z is derived from an aliphatic, cycloaliphatic, aliphatic/aromatic, aromatic or heterocyclic polyisocyanate or polyisothiocyanate having $\geqq 2$ NCO or NCS groups, this radical optionally containing one or more ester, ether, urethane, thiourethane, isocyanurate, urea or biuret functions.

4. A process according to claim 3, wherein Z is derived from an aliphatic or mixed aliphatic/aromatic polyisocyanate having $\geqq 2$ NCO groups, this radical Z optionally containing one or two ester, ether, urethane, thiourethane, isocyanurate, urea or biuret functions.

5. A process according to claim 1, wherein the radical Z has a mean molecular weight $M_n < 10\ 000$.

6. A process according to claim 1, wherein n and m each independently of the other are from 1 to 49.

7. A process according to claim 1, wherein the sum of n + m is from 2 to 50.

8. A process according to claim 1, wherein n is 1, 2 or 3 and m is 3, 2 or 1.

9. A process according to claim 1, wherein E together with $R^2$ is a radical of the formula

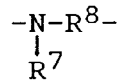

and $R^1$ is ethylene.

10. A process according to claim 1, wherein p is 0.

11. A process according to claim 1, wherein q is 0.

12. A process according to claim 1, wherein E is a radical of the formula

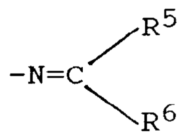 .

13. A process according to claim 12, wherein $R^5$ is isopropyl or tert-butyl or $R^5$ together with $R^6$ is tetramethylene or pentamethylene.

14. A process according to claim 1, wherein T is a radical of the formula $-R^9-Si(OR^3)_{3-q}R^4{}_q$ or

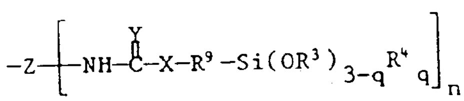 .

15. A process according to claim 14, wherein at least one radical X is -S-.

16. A process according to claim 1, wherein p is 0 and m is 1, E is a radical

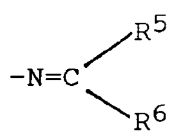

wherein $R^5$ is $C_3$- or $C_4$-alkyl, and $R^2$ is $C_1$-$C_4$alkyl.

17. A moisture-curing polyurethane resin comprising at least one compound of formula I according to claim 1.

18. A resin according to claim 17 comprising from 0.1 to 20 % by weight of a compound of formula I.

## Revendications

### Revendications pour les Etats contractants suivants : CH, DE, FR, GB, IT, LI, NL, SE

1. Composés de formule générale I

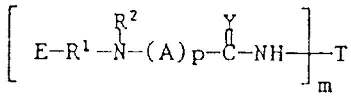 I

dans laquelle

- $R^1$ est un radical alkylène en $C_2$-$C_3$,
- $R^2$ est un hydrogène, un radical alkyle en $C_1$ à $C_6$ ou alcényle en $C_2$ à $C_6$ non substitué ou est substitué par des radicaux -OH, -CN ou $-Si(OR^3)_{3-q}R^4_q$,
- $R^3$ est un radical alkyle en $C_1$ à $C_4$, ou deux radicaux $R^3$ forment ensemble un enchaînement alkylène en $C_1$ à $C_4$,
- $R^4$ est un radical alkyle en $C_1$ à $C_4$ ou phényle, et
- q vaut de 0 à 2, et encore
- E est un résidu de formule

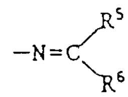

dans laquelle

- $R^5$ est un hydrogène ou un radical alkyle en $C_1$ à $C_4$, et
- $R^6$ est un hydrogène, ou
- $R^5$ et $R^6$ représentent ensemble un enchaînement alkylène en $C_4$ à $C_8$, ou
- E avec $R^2$, représente avec radical de formule

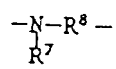

dans laquelle

- $R^7$ est un hydrogène ou un radical alkyle en $C_1$ à $C_4$ ou - $R^9$-$Si(OR^3)_{3-q}R^4_q$, où $R^3$, $R^4$ et q ont les significations ci-dessus, et
- $R^9$ est un radical alkylène en $C_1$ à $C_8$, et
- $R^8$ est un radical de formule

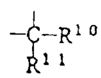

dans laquelle

- $R^{10}$ est un hydrogène ou un radical alkyle en $C_1$ à $C_4$, et
- $R^{11}$ est un hydrogène, ou
- $R^{10}$ et $R^{11}$ forment ensemble un enchaînement alkylène en $C_4$ à $C_8$,

et

- A est un radical $\{(CH_2)_r-O\}$, où r vaut 1, 2 ou 3 et p vaut 0 ou 1,
- Y est un oxygène ou un soufre ; et de plus où
- T est un radical $-R^9$-$Si(OR^3)_{3-q}R^4_q$, un radical de formule

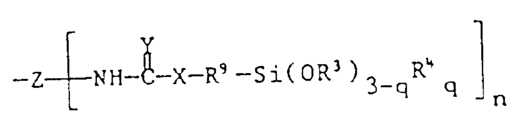

ou, si $R^7$ est un résidu de formule $-R^9$-$Si(OR^3)_{3-q}R^4_q$ et m a une valeur ≧ 2, un radical m-valant Z, où $R^3$, $R^4$, $R^9$, Y et q ont les significations ci-dessus,

- X est -S- ou -NH-, et
- Z est un résidu organique qui dérive d'un polyisocyanate ou d'un polyisothiocyanate, ayant respectivement deux groupes NCO ou NCS, et de plus
- m a une valeur ≧ 1, et
- n a une valeur ≧ 1.

2. Composés selon la revendication 1, où Y est O.

3. Composés selon la revendication 1 de formule I, où Z dérive d'un polyisocyanate ou d'un polyisothiocyanate aliphatique, cycloaliphatique, aliphatique/aromatique, aromatique ou hétérocyclique, ayant un nombre de -groupes respectivement NCO et NCS $\geqq 2$, ce radical pouvant éventuellement contenir une ou plusieurs fonctions ester, éther, uréthanne, thiouréthanne, isocyanaurate, urée ou biuret.

4. Composés selon la revendication 3 de formule I, où Z dérive d'un polyisocyanate aliphatique ou en mélange aliphatique et aromatique comportant un nombre de groupes NCO $\geqq 2$, ce radical Z contenant éventuellement une ou deux fonctions ester, éther, uréthanne, thiouréthanne, isocyanurate, urée ou biuret.

5. Composés selon la revendication 1 de formule I, où le résidu Z a une masse moléculaire moyenne $M_n <$ 10 000.

6. Composés selon la revendication 1, de formule I, où n et m, indépendamment l'un de l'autre, ont chacun une valeur de 1 à 49.

7. Composés selon la revendication 1, de formule I, où la somme n + m est de 2 à 50.

8. Composés selon la revendication 1, de formule I, où n a les valeurs 1, 2 ou 3, et m les valeurs 3, 2 ou 1.

9. Composés selon la revendication 1, de formule I, où E, avec $R^2$, forme un radical de formule

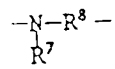

et $R^1$ est un enchaînement éthylène.

10. Composés selon la revendication 1, de formule I, où p vaut 0.

11. Composés selon la revendication 1, de formule I, où q vaut 0.

12. Composés selon la revendication 1, de formule I, où 1 est un radical de formule :

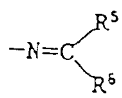

13. Composés selon la revendication 12, de formule I, où $R^4$ est un radical isopropyle ou tert-butyle, ou $R^5$ forme avec $R^6$ un enchaînement tétraméthylène ou pentaméthylène.

14. Composés selon la revendication 11, de formule I, où T est un radical de formules $-R^9-Si(OR^3)_{3-q}>R^4_q$ ou

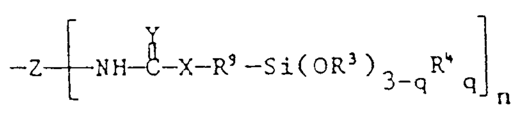

15. Composés selon la revendication 14, de formule I, où au moins un radical X est -S-.

16. Composés selon la revendication 1, de formule I, où p vaut 0 et m vaut 1, E est un radical

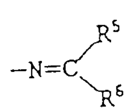

et $R^5$ est un radical alkyle en $C_3$ ou C4, $R^2$ étant un radical alkyle en $C_1$ à $C_4$.

17. Résines de polyuréthanne durcissant à l'humidité, contenant au moins un composé de formule I selon la

revendication 1.

**18.** Résine selon la revendication 17, contenant de 0,1 à 20 % en poids d'un composé de formule I.

**Revendications pour l'Etat contractant suivant : ES**

**1.** Procédé pour préparer des composés de formule générale I

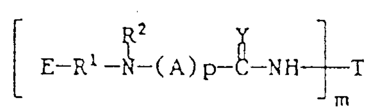

I

dans laquelle

- $R^1$ est un radical alkylène en $C_2$-$C_3$,
- $R^2$ est un hydrogène, un radical alkyle en $C_1$ à $C_6$ ou alcényle en $C_2$ à $C_6$ non substitué ou est substitué par des radicaux -OH, -CN ou $-Si(OR^3)_{3-q}R^4_q$,
- $R^3$ est un radical alkyle en $C_1$ à $C_4$, ou deux radicaux $R^3$ forment ensemble un enchaînement alkylène en $C_1$ à $C_4$,
- $R^4$ est un radical alkyle en $C_1$ à $C_4$ ou phényle, et
- q vaut de 0 à 2, et encore
- E est un résidu de formule

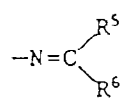

dans laquelle

- $R^5$ est un hydrogène ou un radical alkyle en $C_1$ à $C_4$, et
- $R^6$ est un hydrogène, ou
- $R^5$ et $R^6$ représentent ensemble un enchaînement alkylène en $C_4$ à $C_8$, ou
- E avec $R^2$, représente avec radical de formule

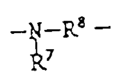

dans laquelle

- $R^7$ est un hydrogène ou un radical alkyle en $C_1$ à $C_4$ ou - $R^9$-$Si(OR^3)_{3-q}R^4_q$, où $R^3$, $R^4$ et q ont les significations ci-dessus, et
- $R^9$ est un radical alkylène en $C_1$ à $C_8$, et
- $R^8$ est un radical de formule

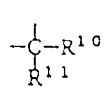

dans laquelle

- $R^{10}$ est un hydrogène ou un radical alkyle en $C_1$ à $C_4$, et
- $R^{11}$ est un hydrogène, ou
- $R^{10}$ et $R^{11}$ forment ensemble un enchaînement alkylène en $C_4$ à $C_8$,

et

- A est un radical $\{(CH_2)_r-O\}$, où r vaut 1, 2 ou 3 et p vaut 0 ou 1,
- Y est un oxygène ou un soufre ; et de plus où
- T est un radical -$R^9$-$Si(OR^3)_{3-q}R^4_q$, un radical de formule

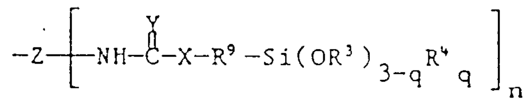

ou, si $R^7$ est un résidu de formule $-R^9-Si(OR^3)_{3-q}R^4_q$ et m a une valeur _ 2, un radical m-valant Z, où $R^3$, $R^4$, $R^9$, Y et q ont les significations ci-dessus,

X est -S- ou -NH-, et

Z est un résidu organique qui dérive d'un polyisocyanate ou d'un polyisothiocyanate, ayant respectivement deux groupes NCO ou NCS, et de plus

m a une valeur ≧ 1, et

n a une valeur ≧ 1, caractérisé en ce qu'on fait réagir m moles d'un composé de formules :

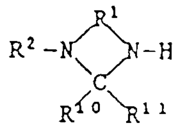 , 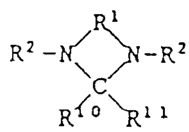 ou 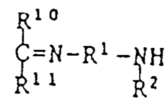

où les radicaux $R^1$, $R^2$, $R^{10}$ et $R^{11}$ ont les significations données ci-dessus, avec un composé ayant les formules :

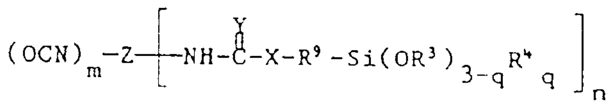

ou

$OCN-R^9-Si(OR^3)_{3-q}R^4_q$,

où $R^3$, $R^4$, $R^9$, X, Y, Z, m, n et q ont les significations données ci-dessus.

2. Procédé selon la revendication 1, où Y est O.

3. Procédé selon la revendication 1, où Z dérive d'un polyisocyanate ou d'un polyisothiocyanate aliphatique, cycloaliphatique, aliphatique/aromatique, aromatique ou hétérocyclique, ayant un nombre de groupes respectivement NCO et NCS ≧ 2, ce radical pouvant éventuellement contenir une ou plusieurs fonctions ester, éther, uréthanne, thiouréthanne, isocyanaurate, urée ou biuret.

4. Procédé selon la revendication 3, où Z dérive d'un polyisocyanate aliphatique ou en mélange aliphatique et aromatique comportant un nombre de groupes NCO ≧2, ce radical Z contenant éventuellement une ou deux fonctions ester, éther, uréthanne, thiouréthanne, isocyanurate, urée ou biuret.

5. Procédé selon la revendication 1, où le résidu Z a une masse moléculaire moyenne $M_n < 10\,000$.

6. Procédé selon la revendication 1, où n et m, indépendamment l'un de l'autre, ont chacun une valeur de 1 à 49.

7. Procédé selon la revendication 1, où la somme n + m est de 2 à 50.

8. Procédé selon la revendication 1, où n a les valeurs 1, 2 ou 3, et m les valeurs 3, 2 ou 1.

9. Procédé selon la revendication 1, où E, avec $R^2$, forme un radical de formule

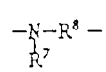

et $R^1$ est un enchaînement éthylène.

**10.** Procédé selon la revendication 1, où p vaut 0.

**11.** Procédé selon la revendication 1, où q vaut 0.

**12.** Procédé selon la revendication 1, où 1 est un radical de formule :

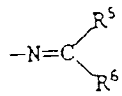

**13.** Procédé selon la revendication 12, où $R^4$ est un radical isopropyle ou tert-butyle, ou $R^5$ forme avec $R^6$ un enchaînement tétraméthylène ou pentaméthylène.

**14.** Procédé selon la revendication 11, où T est un radical de formules $-R^9-Si(OR^3)_{3-q}>R^4_q$ ou

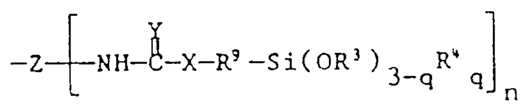

**15.** Procédé selon la revendication 14, où au moins un radical X est -S-.

**16.** Procédé selon la revendication 1, où p vaut 0 et m vaut 1, E est un radical

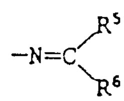

et $R^5$ est un radical alkyle en $C_3$ ou C4, $R^2$ étant un radical alkyle en $C_1$ à $C_4$.

**17.** Résines de polyuréthanne durcissant à l'humidité, contenant au moins un composé selon la revendication 1.

**18.** Résine selon la revendication 17, contenant de 0,1 à 20 % en poids d'un composé de formule I.